(19) Europäisches Patentamt / European Patent Office / Office européen des brevets

(11) **EP 4 518 540 A1**

(12) **EUROPEAN PATENT APPLICATION**
published in accordance with Art. 153(4) EPC

(43) Date of publication:
**05.03.2025  Bulletin 2025/10**

(21) Application number: **23796838.3**

(22) Date of filing: **27.04.2023**

(51) International Patent Classification (IPC):
**H04W 72/51** (2023.01)    **H04W 72/23** (2023.01)
**H04W 72/04** (2023.01)    **H04W 28/08** (2023.01)
**H04L 5/00** (2006.01)    **H04L 27/26** (2006.01)

(52) Cooperative Patent Classification (CPC):
**H04L 5/00; H04L 27/26; H04W 28/08; H04W 72/04; H04W 72/23; H04W 72/51**

(86) International application number:
**PCT/KR2023/005774**

(87) International publication number:
**WO 2023/211196 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022  KR 20220053118**

(71) Applicant: **LG Electronics Inc.**
**Yeongdeungpo-gu**
**Seoul 07336 (KR)**

(72) Inventors:
• **KIM, Jaehyung**
  **Seoul 06772 (KR)**
• **LEE, Youngdae**
  **Seoul 06772 (KR)**
• **LEE, Sunghoon**
  **Seoul 06772 (KR)**

(74) Representative: **Maikowski & Ninnemann Patentanwälte Partnerschaft mbB**
**Postfach 15 09 20**
**10671 Berlin (DE)**

(54) **METHOD FOR TRANSMITTING AND RECEIVING SIGNAL ON BASIS OF FREQUENCY HOPPING IN WIRELESS COMMUNICATION SYSTEM, AND DEVICE THEREFOR**

(57)    A method performed by a user equipment in a wireless communication system according to an embodiment of the present disclosure comprises receiving configuration information related to a frequency band from a base station, and, based on a frequency hopping related to the frequency band, transmitting an uplink signal to the base station or receiving a downlink signal from the base station. The frequency hopping is performed based on a plurality of narrowbands included in the frequency band. One or more resource blocks (RBs) that do not belong to the plurality of narrowbands within the frequency band are deployed based on at least one of i) between contiguous narrowbands, ii) both edges of the frequency band, and/or iii) a center of the frequency band.

【FIG. 15】

```
                    ( Start )
                        |
                        v
   | Receive configuration information |———S1510
                        |
                        v
   | Transmit uplink signal or receive downlink signal |———S1520
                        |
                        v
                     ( End )
```

EP 4 518 540 A1

## Description

[TECHNICAL FIELD]

The present disclosure relates to a method of transmitting and receiving a signal based on frequency hopping in a wireless communication system, and a device thereof.

[BACKGROUND]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

In Rel-18, an NR enhanced Reduced Capability (eRedCap) UE featuring a further reduced maximum UE bandwidth (e.g., 5 MHz) will be introduced.

[DISCLOSURE]

[TECHNICAL PROBLEM]

The eRedCap UE may have poor transmission and reception performance compared to a non-RedCap UE and a Rel-17 RedCap UE. A reduction in frequency diversity performance due to a reduction in a bandwidth supported by the UE is one of the main causes of the above-described reduction in the transmission and reception performance. As a UE support bandwidth decreases, a performance reduction width further increases.

Further, considering wearables, massive wireless sensors, etc. which are RedCap main use cases, traffic congestion problems are expected because massive connection needs to be supported through a narrow bandwidth.

An object of the present disclosure is to propose a method for solving the above-mentioned problems. Specifically, an object of the present disclosure is to propose a method for a UE with reduced capability in an NR system to perform DL/UL operation based on frequency hopping.

Technical objects to be achieved in the disclosure are not limited to the aforementioned technical objects, and other technical objects not described above may be evidently understood by a person having ordinary skill in the art to which the disclosure pertains from the following description.

[TECHNICAL SOLUTION]

A method performed by a user equipment in a wireless communication system according to an embodiment of the present disclosure comprises receiving, from a base station, configuration information related to a frequency band, and based on a frequency hopping related to the frequency band, transmitting an uplink signal to the base station or receiving a downlink signal from the base station.

The frequency hopping is performed based on a plurality of narrowbands included in the frequency band.

One or more resource blocks (RBs) that do not belong to the plurality of narrowbands within the frequency band are deployed based on at least one of i) between contiguous narrowbands, ii) both edges of the frequency band, and/or iii) a center of the frequency band.

The one or more RBs may be evenly deployed at both edges of the frequency band.

One RB remaining after the one or more RBs are evenly deployed at both edges of the frequency band may be deployed in the center of the frequency band.

The one or more RBs may be deployed based on the center of the frequency band.

The one or more RBs may be evenly deployed between the contiguous narrowbands.

One or more first RBs remining after the one or more RBs are evenly deployed between the contiguous narrowbands may be evenly deployed at both edges of the frequency band.

One RB remaining after the one or more first RBs are evenly deployed at both edges of the frequency band may be deployed in the center of the frequency band.

The one or more RBs may be symmetrically deployed based on the center of the frequency band.

One RB remaining after the one or more RBs are symmetrically deployed based on the center of the frequency band may be deployed in the center of the frequency band.

The frequency hopping may be performed in an order based on an ascending order or a descending order of indices for the plurality of narrowbands.

The indices for the plurality of narrowbands may be determined based on an ascending order or a descending order of resource block (RB) indices.

The indices for the plurality of narrowbands may be determined based on the configuration information.

An index of one or more narrowbands among the indices for the plurality of narrowbands may be configured to be excluded from the frequency hopping.

The frequency hopping may be performed based on i) an RRC signaling, ii) downlink control information (DCI), or iii) a medium access control-control element (MAC CE).

The method may further comprise receiving configuration information related to the frequency hopping from the base station via the RRC signaling.

The configuration information related to the frequency hopping may include information representing whether the frequency hopping is enabled or not. The frequency hopping may be performed based on the frequency hopping being enabled.

The method may further comprise receiving information related to the frequency hopping based on the DCI or the MAC CE. The information related to the frequency hopping may include information representing whether the frequency hopping is activated or not. The frequency hopping may be performed based on the frequency hopping being activated.

The method may further comprise receiving information indicating a starting narrowband for the frequency hopping. The frequency hopping may be performed based on a frequency hopping (FH) reference point and a FH interval. The FH reference point may be based on a time at which the information indicating the starting narrowband is received.

A user equipment operating in a wireless communication system according to another embodiment of the present disclosure comprises one or more transceivers, one or more processors, and one or more memories operably connectable to the one or more processors, and the one or more memories store instructions that configure the one or more processors to perform operations based on being executed by the one or more processors.

The operations comprise receiving, from a base station, configuration information related to a frequency band, and, based on a frequency hopping related to the frequency band, transmitting an uplink signal to the base station or receiving a downlink signal from the base station.

The frequency hopping is performed based on a plurality of narrowbands included in the frequency band.

One or more resource blocks (RBs) that do not belong to the plurality of narrowbands within the frequency band are deployed based on at least one of i) between contiguous narrowbands, ii) both edges of the frequency band, and/or iii) a center of the frequency band.

A device according to another embodiment of the present disclosure comprises one or more memories and one or more processors operably connected to the one or more memories.

The one or more memories include instructions that configure the one or more processors to perform operations based on being executed by the one or more processors.

The operations comprise receiving, from a base station, configuration information related to a frequency band, and, based on a frequency hopping related to the frequency band, transmitting an uplink signal to the base station or receiving a downlink signal from the base station.

The frequency hopping is performed based on a plurality of narrowbands included in the frequency band.

One or more resource blocks (RBs) that do not belong to the plurality of narrowbands within the frequency band are deployed based on at least one of i) between contiguous narrowbands, ii) both edges of the frequency band, and/or iii) a center of the frequency band.

One or more non-transitory computer readable mediums according to another embodiment of the present disclosure store one or more instructions.

The one or more instructions executable by one or more processors configure the one or more processors to perform operations.

The operations comprise receiving, from a base station, configuration information related to a frequency band, and, based on a frequency hopping related to the frequency band, transmitting an uplink signal to the base station or receiving a downlink signal from the base station.

The frequency hopping is performed based on a plurality of narrowbands included in the frequency band.

One or more resource blocks (RBs) that do not belong to the plurality of narrowbands within the frequency band are deployed based on at least one of i) between contiguous narrowbands, ii) both edges of the frequency band, and/or iii) a center of the frequency band.

A method performed by a base station in a wireless communication system according to another embodiment of the present disclosure comprises transmitting, to a user equipment (UE), configuration information related to a frequency band, and, based on a frequency hopping related to the frequency band, receiving an uplink signal from the UE or transmitting a downlink signal to the UE.

The frequency hopping is performed based on a plurality of narrowbands included in the frequency band.

One or more resource blocks (RBs) that do not belong to the plurality of narrowbands within the frequency band are deployed based on at least one of i) between contiguous narrowbands, ii) both edges of the frequency band, and/or iii) a center of the frequency band.

A base station operating in a wireless communication system according to another embodiment of the present disclosure comprises one or more transceivers, one or more processors, and one or more memories operably connectable to the one or more processors, and the one or more memories store instructions that configure the one or more processors to perform operations based on being executed by the one or more processors.

The operations comprise transmitting, to a user equipment (UE), configuration information related to a frequency band, and, based on a frequency hopping related to the frequency band, receiving an uplink signal from the UE or transmitting a downlink signal to the UE.

The frequency hopping is performed based on a plurality of narrowbands included in the frequency band.

One or more resource blocks (RBs) that do not belong to the plurality of narrowbands within the frequency band are deployed based on at least one of i) between contiguous narrowbands, ii) both edges of the frequency band, and/or iii) a center of the frequency band.

[ADVANTAGEOUS EFFECTS]

According to an embodiment of the present disclosure, a plurality of narrowbands for frequency hopping (FH) are defined, and frequency hopping based on the plurality of narrowbands is performed in DL/UL operation. The following effects are derived.

Frequency diversity performance is improved through the frequency hopping. In addition, traffic is not concentrated in a specific band (e.g., a maximum bandwidth supported by a UE with reduced capability), and can be distributed among a plurality of narrowbands. Accordingly, the present embodiment can support communication according to use cases using a reduced bandwidth while minimizing a reduction in performance due to a reduction in a bandwidth supported by the UE.

According to an embodiment of the present disclosure, one or more resource blocks (RBs) that do not belong to the plurality of narrowbands in a frequency band are deployed based on a predefined location (e.g., i) between contiguous narrowbands, ii) both edges of the frequency band, and/or iii) a center of the frequency band). Since the narrowbands in the frequency band and the deployment of the RBs that do not belong to the narrowbands are predefined, information required to identify the narrowbands can be minimized. That is, the present disclosure can reduce signaling overhead required to transmit information related to the narrowbands for the frequency hopping.

According to an embodiment of the present disclosure, the frequency hopping is performed in an order based on an ascending order or a descending order of indices for the plurality of narrowbands.

For example, the indices for the plurality of narrowbands may be determined in ascending/descending order of RB indices. Since a base station does not need to separately indicate the order of the frequency hopping to the UE, signaling overhead required for transmission of information related to the frequency hopping is reduced.

For example, the indices for the plurality of narrowbands may be determined based on configuration information. As flexibility for the order of the frequency hopping is increased, a more suitable order of the frequency lapping can be utilized in terms of frequency diversity gain, scheduling complexity, etc.

It may be inefficient to always perform a frequency hopping operation for traffic offloading. According to an embodiment of the present disclosure, the frequency hopping can be performed based on the frequency hopping being activated via DCI or MAC CE. Accordingly, the frequency hopping operation can be adaptively performed in response to a traffic situation of a cell.

Effects which may be obtained from the disclosure are not limited by the above effects, and other effects that have not been mentioned may be clearly understood from the following description by those skilled in the art to which the disclosure pertains.

[BRIEF DESCRIPTION OF THE DRAWINGS]

FIG. 1 illustrates an example of a frame structure in an NR system.

FIG. 2 illustrates an example of a resource grid in NR.

FIG. 3 illustrates physical channels and general signal transmission used in a 3GPP system.

FIG. 4 is a diagram illustrating an SSB structure to which a method proposed in the present disclosure is applicable.

FIG. 5 illustrates SSB transmission to which a method proposed in the present disclosure is applicable.

FIGS. 6 and 7 illustrate a random access procedure to which a method proposed in the present disclosure is applicable.

FIG. 8 illustrates a 2-step random access procedure to which a method proposed in the present disclosure is applicable.

FIG. 9 illustrates narrowbands according to a first embodiment of the present disclosure.

FIG. 10 illustrates narrowbands according to a second embodiment of the present disclosure.

FIG. 11 illustrates narrowbands according to a third embodiment of the present disclosure.

FIG. 12 illustrates narrowbands according to a fourth embodiment of the present disclosure.

FIG. 13 is a flowchart illustrating a downlink operation according to an embodiment of the present disclosure.

FIG. 14 is a flowchart illustrating an uplink operation according to another embodiment of the present disclosure.

FIG. 15 is a flowchart illustrating a method performed by a UE in a wireless communication system according to an embodiment of the present disclosure.

FIG. 16 is a flowchart illustrating a method performed by a base station in a wireless communication system according to another embodiment of the present disclosure.

FIG. 17 illustrates a communication system 1 applied to the present disclosure.

FIG. 18 illustrates wireless devices applicable to the present disclosure.

FIG. 19 illustrates a signal process circuit for a transmission signal.

FIG. 20 illustrates another example of a wireless device applied to the present disclosure.

FIG. 21 illustrates a hand-held device applied to the present disclosure.

[DETAILED DESCRIPTION]

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/L TE-A/L TE-A pro.

For clarity of description, the technical spirit of the present disclosure is described based on the 3GPP communication system (e.g., LTE-A or NR), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR may be collectively referred to as the 3GPP system.

Matters disclosed in a standard document opened before the disclosure may be referred to for a background art, terms, omissions, etc., used for describing the disclosure. For example, the following documents may be referred to.

3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

**New Rat (NR) Numerology and Frame Structure**

In the NR system, multiple numerologies may be supported. The numerologies may be defined by subcarrier spacing and a cyclic prefix (CP) overhead. Spacing between the plurality of subcarriers may be derived by scaling basic subcarrier spacing into an integer N (or μ). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1. μ for a bandwidth part and the cyclic prefix are obtained from RRC parameters provided by the BS.

[Table 1]

| $\mu$ | $\Delta f = 2^{\mu}*15$ [kHz] | Cyclic Prefix (CP) |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges FR1 and FR2. FR1 may denote sub 6 GHz range, and FR2 may denote above 6 GHz range and may mean millimeter wave (mmW).

Table 2 below shows an example of definition of the NR frequency band.

[Table 2]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ms. In this case, there may be a set of UL frames and a set of DL frames.

Uplink frame number i for transmission from a user equipment (UE) shall start $T_{TA} = N_{TA} T_s$ before the start of a corresponding downlink frame at the corresponding UE.

Regarding the numerology μ, slots are numbered in increasing order of $n_s^{\mu} \in \left\{ 0,...,N_{subframe}^{slots,\,\mu} - 1 \right\}$ within a subframe and are numbered in increasing order of $n_{s,f}^{\mu} \in \left\{ 0,...,N_{frame}^{slots,\,\mu} - 1 \right\}$ within a radio frame. One slot consists of $N_{symb}^{\mu}$ consecutive OFDM symbols of $N_{symb}^{\mu}$, and $N_{symb}^{\mu}$ is determined depending on a numerology used and slot configuration. The start of slots $n_s^{\mu}$ in a subframe is aligned in time with the start of OFDM symbols $n_s^{\mu} N_{symb}^{\mu}$ in the same subframe.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame,\,\mu}$ of slots per radio frame, and the number $N_{\text{slot}}^{\text{subframe, }\mu}$ of slots per subframe in a normal CP. Table 4 represents the number of OFDM symbols per slot, the number of slots per radio frame, and the number of slots per subframe in an extended CP.

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

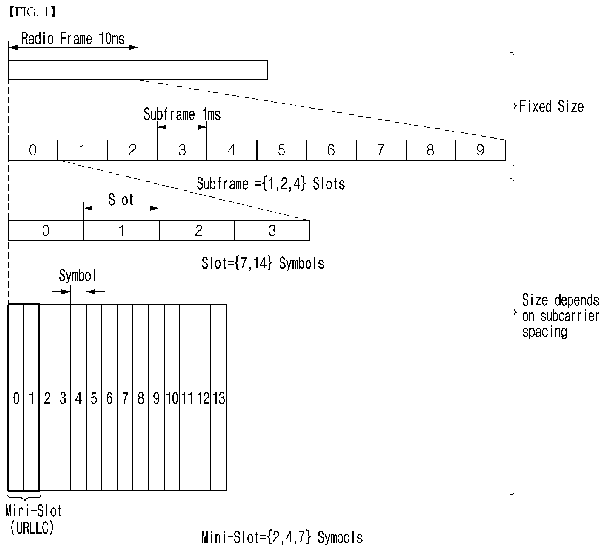

FIG. 1 illustrates an example of a frame structure in a NR system. FIG. 1 is merely for convenience of explanation and does not limit the scope of the disclosure.

In Table 4, in case of $\mu$ = 2, i.e., as an example in which a subcarrier spacing (SCS) is 60 kHz, one subframe (or frame) may include four slots with reference to Table 3, and one subframe = {1, 2, 4} slots shown in FIG. 1, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. may be considered.

The physical resources that may be considered in the NR system are described in detail below.

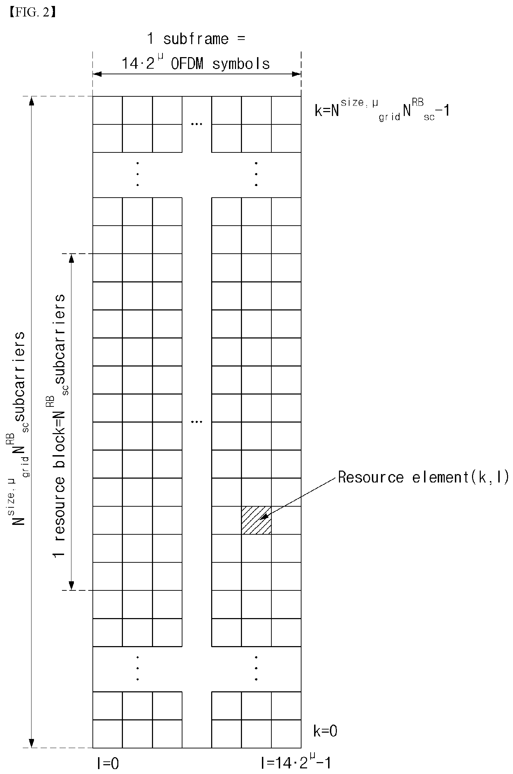

FIG. 2 illustrates an example of a resource grid supported in NR.

Referring to FIG. 2, for each subcarrier spacing configuration and carrier, a resource grid of $N_{\text{grid}}^{\text{size},\mu}$*$N_{\text{sc}}^{\text{RB}}$ subcarriers and $14 \cdot 2^{\mu}$ OFDM symbols is defined, where $N_{\text{grid}}^{\text{size},\mu}$ is indicated by RRC signaling from the BS. $N_{\text{grid}}^{\text{size},\mu}$ may change between uplink and downlink as well as the subcarrier spacing configuration $\mu$.

Each element of the resource grid for the numerology $\mu$ and the antenna port p is called a resource element and is uniquely identified by an index pair $(k,\bar{l})$, where $k = 0,..., N_{\text{RB}}^{\mu} N_{\text{sc}}^{\text{RB}} - 1$ is an index on a frequency domain, and $$\bar{l} = 0,...,2^{\mu} N_{\text{symb}}^{(\mu)} - 1$$ refers to a location of a symbol in a subframe. The index pair $(k,l)$ is used to refer to a resource element in a slot, where $$l = 0,...,N_{\text{symb}}^{\mu} - 1.$$

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$. Further, a physical resource block is defined as $$N_{\text{sc}}^{\text{RB}} = 12$$ consecutive subcarriers in the frequency domain.

Considering that the UE may not be able to support a wide bandwidth to be supported in the NR system at one time, the UE may be configured to operate in a part of a frequency bandwidth of a cell (hereinafter, referred to as a bandwidth part (BWP)).

Resource blocks of the NR system include physical resource blocks defined in the bandwidth part and common resource blocks that are numbered upward from 0 in a frequency domain for the subcarrier spacing configuration $\mu$.

Point A serves as a common reference point of a resource block grid and may be obtained as follows.

- offsetToPointA for a PCell downlink represents a frequency offset between point A and the lowest subcarrier of the lowest resource block that overlaps with the SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents the frequency-location of point A expressed as in absolute radio-frequency channel number (ARFCN),

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{\mathrm{CRB}}^{\mu}$ in the frequency domain and resource elements (k, l) for the subcarrier spacing configuration $\mu$ may be given by the following Equation 1.

【Equation 1】

$$n_{\mathrm{CRB}}^{\mu} = \left\lfloor \frac{k}{N_{\mathrm{sc}}^{\mathrm{RB}}} \right\rfloor$$

Here, $k$ may be defined relative to point A so that $k = 0$ corresponds to a subcarrier centered around point A. Physical resource blocks are defined within a bandwidth part (BWP) and are numbered from 0 to $N_{\mathrm{BWP},i}^{\mathrm{size}} - 1$, where $i$ is a number of the BWP. A relation between the physical resource block $n_{\mathrm{PRB}}$ in BWP $i$ and the common resource block $n_{\mathrm{CRB}}$ may be given by the following Equation 2.

【Equation 2】

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

**Bandwidth Part (BWP)**

In the NR system, up to 400 MHz can be supported per one carrier. If a UE operating in such a wideband carrier is always operated with a radio frequency (RF) module for all carriers turned on, battery consumption by the UE may increase. Alternatively, considering several use cases (e.g., eMBB, URLLC, mMTC, V2X, etc.) that are operated in one wideband carrier, different numerologies (e.g., subcarrier spacing) may be supported for each frequency band in the corresponding carrier. Alternatively, a capability for a maximum bandwidth may be different for each UE. Considering this, a base station (BS) may indicate the UE to operate only in a partial bandwidths rather than the entire bandwidth of a wideband carrier, and the partial bandwidth is defined as a bandwidth part (BWP). The BWP in the frequency doamin is a subset of continuous common resource blocks defined for numerology $\mu i$ within a bandwidth part i on the carrier, and one numerology (e.g., subcarrier spacing, CP length, slot/mini-slot duration) may be configured.

The BS may configure one or more BWPs within one carrier configured for the UE. Alternatively, if UEs are concentrated on a specific BWP, some UEs may be shifted to different BWPs for load balancing. Alternatively, both BWPs may be configured in the same slot excluding some center spectrums of the entire bandwidth considering frequency domain inter-cell interference cancellation between contiguous cells, etc. That is, the BS can configure at least one DL/UL BWP to a UE associated with the wideband carrier, can activate at least one DL/UL BWP of configured DL/UL BWP(s) at a specific time (by L1 signaling which is the physical layer control signal, MAC control element (CE) which is the MAC layer control signal, or RRC signaling, etc.) and indicate to switch to other configured DL/UL BWP (by L1 signaling, MAC CE, or RRC signaling, etc.), or can the UE to switch to a given DL/UL BWP if a timer value is set and a timer is expired. The activated DL/UL BWP is defined as an active DL/UL BWP. The UE may not receive configuration for the DL/UL BWP when the UE is in an initial access procedure or RRC connection of the UE is not set up yet. In this situation, a DL/UL BWP assumed by the UE is defined as an initial active DL/UL BWP.

Physical Channel and General Signal Transmission

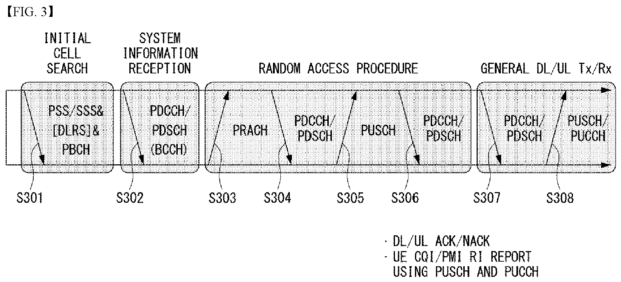

FIG. 3 illustrates physical channels and general signal transmission used in 3GPP systems. In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S201). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S202).

When there is no radio resource first accessing the eNB or for signal transmission, the UE may perform a Random Access Procedure (RACH) to the eNB (S203 to S206). To this end, the UE may transmit a specific sequence to a preamble through a Physical Random Access Channel (PRACH) (S203 and S205) and receive a response message (Random Access Response (RAR) message) for the preamble through the PDCCH and a corresponding PDSCH. In the case of a contention based RACH, a Contention Resolution Procedure may be additionally performed (S206).

The UE that performs the above procedure may then perform PDCCH/PDSCH reception (S207) and Physical Uplink Shared Channel (PUSCH)/Physical Uplink Control Channel (PUCCH) transmission (S208) as a general uplink/-downlink signal transmission procedure. In particular, the UE may receive Downlink Control Information (DCI) through the PDCCH.

The UE monitors a set of PDCCH candidates in monitoring occasions configured to one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH.

The PDCCH may be used to schedule DL transmissions on PDSCH and UL transmissions on PUSCH. The DCI on the PDCCH includes downlink assignment (i.e., DL grant) related to a downlink shared channel and including at least a modulation and coding format and resource allocation information, or an uplink grant (UL grant) related to an uplink shared channel and including a modulation and coding format and resource allocation information. The DCI has different formats depending on its purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

**Initial Access (IA) 및 Random Access (RA) procedure**

**Synchronization Signal Block (SSB) Transmission and Related Operation**

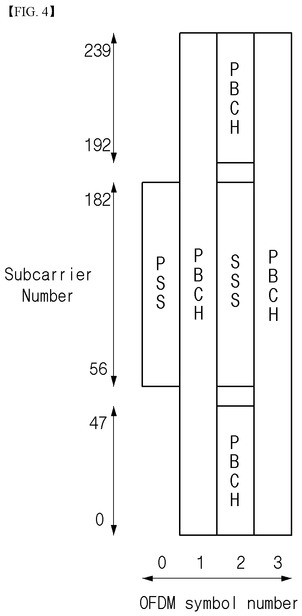

FIG. 4 is a diagram illustrating an SSB structure to which a method proposed in the present disclosure is applicable. The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 4, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers.

Polar coding and quadrature phase shift keying (QPSK) are applied to the PBCH. The PBCH consists of data REs and demodulation reference signal (DMRS) REs every OFDM symbol. Three DMRS REs are present per RB, and three data REs are present between the DMRS REs.

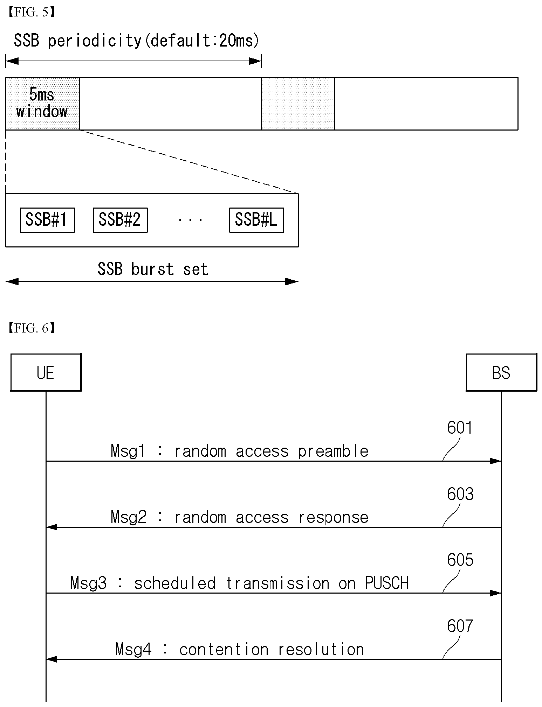

FIG. 5 illustrates SSB transmission to which a method proposed in the present disclosure is applicable.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SSB burst set. The maximum transmission number L of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time location of SSB candidates within the SSB burst set may be defined depending on SCS as follows. The time location of the SSB candidates is indexed (SSB index) from 0 to L-1 based on time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

### System Information Acquisition

System information (SI) is divided into a master information block (MIB) and a plurality of system information blocks (SIB). The SI other than the MIB may be referred to as remaining minimum system information (RMSI). The following may be referred to for details.

- The MIB includes information/parameters for monitoring PDCCH scheduling PDSCH carrying system information block1 (SIB1) and is transmitted by a BS via PBCH of SSB. For example, a UE may check whether a control resource set (CORESET) for a Type0-PDCCH common search space exists based on the MIB. The Type0-PDCCH common search space is a kind of PDCCH search space and is used to transmit a PDCCH for scheduling an SI message. If there is a Type0-PDCCH common search space, the UE may determine, based on information (e.g., pdcch-ConfigSIB1)) within the MIB, (i) a plurality of contiguous resource blocks and one or more consecutive symbols constituting the CORESET, and (ii) a PDCCH occasion (e.g., time domain location for PDCCH reception). If there is no Type0-PDCCH common search space, pdcch-ConfigSIB1 provides information for a frequency location where SSB/SIB1 exists and a frequency range where the SSB/SIB1 does not exist.
- The SIB1 contains information related to availability and scheduling (e.g., transmission periodicity, SI-window size) of the remaining SIBs (hereinafter, referred to as SIBx, where x is an integer of 2 or more). For example, the SIB1 may inform whether the SIBx is periodically broadcasted or whether the SIBx is provided by a request of the UE according to an on-demand scheme. If the SIBx is provided by the on-demand scheme, the SIB1 may include information which the UE requires to perform an SI request. The SIB1 is transmitted via the PDSCH, the PDCCH for scheduling the SIB1 is transmitted through the Type0-PDCCH common search space, and the SIB1 is transmitted via the PDSCH indicated by the PDCCH.
- The SIBx is included in the SI message and is transmitted via the PDSCH. Each SI message is sent within a time window (i.e., SI-window) which periodically occurs.

### Random Access Procedure

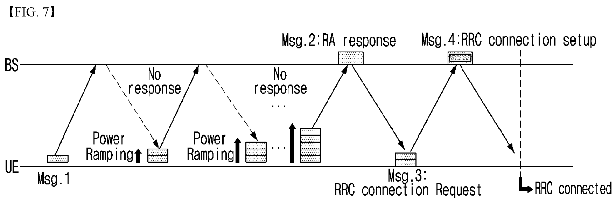

A random access procedure of a UE may be summarized as shown in Table 5 and FIGs. 6 and 7.

[Table 5]

|  | Type of Signals | Operations/Information obtained |
|---|---|---|
| 1st step | PRACH preamble in UL | * Initial beam obtainment |

(continued)

|  | | Type of Signals | Operations/Information obtained |
|---|---|---|---|
|  | | | * Random selection of RA-preamble ID |
|  | 2nd step | Random Access Response on DL-SCH | * Timing Advanced information<br>* RA-preamble ID<br>* Initial UL grant, Temporary C-RNTI |
|  | 3rd step | UL transmission on UL-SCH | * RRC connection request<br>* UE identifier |
|  | 4th step | Contention Resolution on DL | * Temporary C-RNTI on PDCCH for initial access<br>* C-RNTTI on PDCCH for UE in RRC_CONNECTED |

The UE may acquire UL synchronization and UL transmission resources through the random access procedure. The random access procedure is classified into a contention-based random access procedure and a contention-free random access procedure.

FIGS. 6 and 7 illustrate a random access procedure to which a method proposed in the present disclosure is applicable. More specifically, FIGS. 6 and 7 illustrate a contention-based random access procedure. This is described in detail below.

First, a UE may transmit a random access preamble on a PRACH as Msg1 of a random access procedure in UL (e.g., see, 601 of FIG. 6).

Random access preamble sequences having different two lengths are supported. Long sequence length 839 is applied to subcarrier spacings of 1.25 kHz and 5 kHz, and short sequence length 139 is applied to subcarrier spacings of 15 kHz, 30 kHz, 60 kHz and 120 kHz.

Multiple preamble formats are defined by one or more RACH OFDM symbols and different cyclic prefixes (and/or guard time). RACH configuration for a cell is included in system information of the cell and is provided to the UE. The RACH configuration includes information on a subcarrier spacing of PRACH, available preambles, preamble format, and the like. The RACH configuration includes association information between SSBs and RACH (time-frequency) resources. The UE transmits a random access preamble in the RACH time-frequency resource associated with the detected or selected SSB.

A threshold of the SSB for the RACH resource association may be set by the network, and an RACH preamble is transmitted or retransmitted based on the SSB in which reference signal received power (RSRP) measured based on the SSB satisfies the threshold. For example, the UE may select one of the SSB(s) satisfying the threshold and may transmit or retransmit the RACH preamble based on the RACH resource associated with the selected SSB.

When a BS receives the random access preamble from the UE, the BS transmits a random access response (RAR) message (Msg2) to the UE (e.g., see 603 of FIG.6). A PDCCH that schedules a PDSCH carrying a RAR is CRC masked with a random access (RA) radio network temporary identifier (RNTI) (RA-RNTI) and is transmitted. The UE that detects the PDCCH masked with the RA-RNTI may receive a RAR from the PDSCH scheduled by DCI carried by the PDCCH. The UE checks whether the RAR includes random access response information for the preamble transmitted by the UE, i.e., Msg1. Presence or absence of random access information for the Msg1 transmitted by the UE may be determined based on presence or absence of a random access preamble ID for the preamble transmitted by the UE. If there is no response to the Msg1, the UE may retransmit the RACH preamble less than a predetermined number of times while performing power ramping. The UE calculates PRACH transmission power for preamble retransmission based on most recent pathloss and a power ramping counter.

The random access response information includes timing advance information for UL synchronization, an UL grant, and UE temporary cell RNTI (C-RNTI). If a temporary UE receives random access response information for the UE itself on the PDSCH, the UE can know timing advance information for UL synchronization, an initial UL grant, and UE temporary cell RNTI (C-RNTI). The timing advance information is used to control uplink signal transmission timing. In order to ensure that the PUSCH/PUCCH transmission by the UE is better aligned with subframe timing at a network end, the network (e.g. BS) may measure a time difference between the PUSCH/PUCCH/SRS reception and subframes and send timing advance information based on the time difference. The UE may perform UL transmission as Msg3 of the random access procedure on a physical uplink shared channel based on the random access response information (e.g., see 605 of FIG.6). The Msg3 may include an RRC connection request and a UE identifier. The network may transmit Msg4 as a response to the Msg3, and the Msg4 may be handled as a contention resolution message on DL (e.g., see 607 of FIG.6). The UE may enter an RRC connected state by receiving the Msg4.

Meanwhile, the contention-free random access procedure may be used or performed when the UE handovers to another cell or the BS or when the contention-free random access procedure is requested by a command of the BS. A basic process of the contention-free random access procedure is similar to the contention-based random access procedure.

However, unlike the contention-based random access procedure in which the UE randomly selects a preamble to be used among a plurality of random access preambles, in the contention-free random access procedure, a preamble (hereinafter, referred to as a dedicated random access preamble) to be used by the UE is allocated by the BS to the UE. Information on the dedicated random access preamble may be included in an RRC message (e.g., a handover command) or may be provided to the UE via a PDCCH order. When the random access procedure is initiated, the UE transmits the dedicated random access preamble to the BS. When the UE receives the random access procedure from the BS, the random access procedure is completed.

As mentioned above, the UL grant in the RAR schedules PUSCH transmission to the UE. The PUSCH carrying initial UL transmission based on the UL grant in the RAR is also referred to as Msg3 PUSCH. The content of the RAR UL grant starts at an MSB and ends at a LSB, and is given in Table 6.

[Table 6]

| RAR UL grant field | Number of bits |
|---|---|
| Frequency hopping flag | 1 |
| Msg3 PUSCH frequency resource allocation | 12 |
| Msg3 PUSCH time resource allocation | 4 |
| Modulation and coding scheme (MCS) | 4 |
| Transmit power control (TPC) for Msg3 PUSCH | 3 |
| CSI request | 1 |

In the contention-free random access procedure, a CSI request field in the RAR UL grant indicates whether the UE includes an aperiodic CSI report in the corresponding PUSCH transmission. A subcarrier spacing for the Msg3 PUSCH transmission is provided by an RRC parameter. The UE will transmit the PRACH and Msg3 PUSCH on the same uplink carrier of the same service serving cell. A UL BWP for Msg3 PUSCH transmission is indicated by SIB1 (System-InformationBlock1).

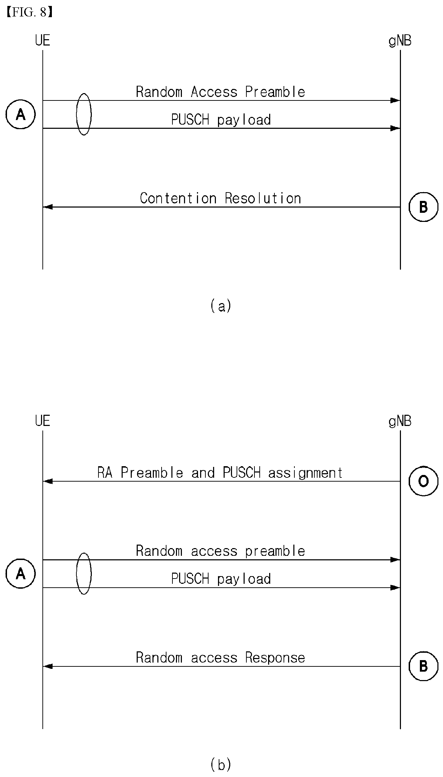

FIG. 8 illustrates a 2-step random access procedure to which a method proposed in the present disclosure is applicable.

More specifically, in FIG. 8, (a) illustrates contention-based random access (CBRA), and (b) illustrates contention-free random access (CFRA).

In FIG. 8, message A (MSGA) includes a preamble and a PUSCH payload. The preamble and the PUSCH payload are multiplexed in a time division multiplexing (TDM) scheme. Message B (MSGB) is a response to the message A (MSGA) and may be transmitted for contention resolution, fallback indication(s) and/or backoff indication.

The contents described above can be combined and applied to methods described below in the present disclosure, or can be supplemented to clarify technical features of the methods described in the present disclosure. Methods described below are merely distinguished for convenience of explanation. Thus, it is obvious that partial configuration of any method can be substituted or combined with partial configuration of another method.

**Technical terms used in the present disclosure**

UE: User Equipment
SSB: Synchronization Signal Block
MIB: Master Information Block
RMSI: Remaining Minimum System Information
FR1: Frequency domain with frequency range of 1.6 GHz or less (e.g., 450 MHz to 6,000 MHz)
FR2: Millimeter wave (mmWave) domain with frequency range of 2.24 GHz or higher (e.g., 24,250 MHz to 52,600 MHz)
BW: Bandwidth
BWP: Bandwidth Part
RNTI: Radio Network Temporary Identifier
CRC: Cyclic Redundancy Check
SIB: System Information Block

SIB1: SIB1 for NR devices = RMSI (Remaining Minimum System Information). It broadcasts information, etc. necessary for cell access of an NR UE.

CORESET (COntrol REsource SET): Time/frequency resource in which an NR UE tries candidate PDCCH decoding
CORESET#0: CORESET for Type0-PDCCH CSS set for NR devices (configured in MIB)
Type0-PDCCH CSS set: a search space set in which an NR UE monitors a set of PDCCH candidates for a DCI format with CRC scrambled by a SI-RNTI
MO: PDCCH Monitoring Occasion for Type0-PDCCH CSS set

SIB1-R: (additional) SIB1 for reduced capability NR devices. It may be limited when it is generated with a separate TB from SIB1 and is transmitted on a separate PDSCH.

CORESET#0-R: CORESET#0 for reduced capability NR devices
Type0-PDCCH-R CSS set: a search space set in which a redcap UE monitors a set of PDCCH candidates for a DCI format with CRC scrambled by a SI-RNTI
MO-R: PDCCH Monitoring Occasion for Type0-PDCCH CSS set
Cell defining SSB (CD-SSB): SSB including RMSI scheduling information among NR SSBs

Non-cell defining SSB (non-CD-SSB): SSB that has been deployed on NR sync raster, but does not include RMSI scheduling information of a corresponding cell for measurement. But, the SSB may include information informing a location of cell defining SSB.

SCS: subcarrier spacing
SI-RNTI: System Information Radio-Network Temporary Identifier

Camp on: "Camp on" is the UE state in which the UE stays on a cell and is ready to initiate a potential dedicated service or to receive an ongoing broadcast service.

TB: Transport Block
RSA (Redcap standalone): Cell supporting only redcap device or service
SIB1(-R)-PDSCH: PDSCH transmitting SIB1(-R)

SIB1(-R)-DCI: DCI scheduling SIB1(-R)-PDSCH. DCI format 1_0 with CRC scrambled by SI-RNTI.

SIB1(-R)-PDCCH: PDCCH transmitting SIB1(-R)-DCI
FDRA: Frequency Domain Resource Allocation
TDRA: Time Domain Resource Allocation
RA: Random Access

MSGA: preamble and payload transmissions of the random access procedure for 2-step RA type.

MSGB: response to MSGA in the 2-step random access procedure. MSGB may consist of response(s) for contention resolution, fallback indication(s), and backoff indication.
RO-N: RACH Occasion (RO) for normal UE 4-step RACH and 2-step RACH (if configured)

RO-N1, RO-N2: If separate RO is configured for normal UE 2-step RACH, it is divided into RO-N1 (4-step) and RO-N2 (2-step).
RO-R: RACH Occasion (RO) separately configured from RO-N for redcap UE 4-step RACH and 2-step RACH(if configured)

RO-R1, RO-R2: If separate RO is configured for redcap UE 2-step RACH, it is divided into RO-R1 (4-step) and RO-R2 (2-step).

PG-R: MsgA-Preambles Group for redcap UEs
RAR: Random Access Response
RAR window: the time window to monitor RA response(s)
FH: Frequency Hopping
iBWP: initial BWP
iBWP-DL(-UL): initial DL(UL) BWP

iBWP-DL(-UL)-R: (separate) initial DL(UL) BWP for RedCap
CS: Cyclic shift
NB: Narrowband

A method and device for supporting frequency hopping (FH) and traffic offloading (TO) are described in detail below.

In addition to 5G main use cases (mMTC, eMBB and URLLC), importance/interest in use case areas across mMTC and eMBB, or mMTC and URLLC has been increasing in recent years. Such use cases may include connected industries, smart city, wearables, etc. In order to more efficiently support the use cases in terms of UE cost/complexity, power consumption, and the like in a wireless communication system, a new type of UE that is distinguished from an existing NR UE has been introduced. The new type of UE is referred to as a Reduced Capability NR UE (hereinafter referred to as a RedCap UE/terminal, or RedCap), and the existing NR UE is referred to as a non-RedCap UE/terminal or non-RedCap in order to distinguish from the RedCap UE.

The RedCap UE has features that are inexpensive compared to the non-RedCap UE and have small power consumption, and in particular, may have all or some of features based on Table 7 below.

[Table 7]

| [RedCap UE features] |
| --- |
| ● Complexity reduction features |
|    ■ Reduced maximum UE Bandwidth |
|    ■ Reduced number of UE RX/TX branches/antennas |
|    ■ Half-Duplex-FDD |
|    ■ Relaxed UE processing time |
|    ■ Relaxed UE processing capability |
| ● Power saving |
|    ■ Extended DRX for RRC Inactive and/or Idle |
|    ■ RRM relaxation for stationary devices |

Target use cases of the RedCap UE with the above features may be based on Table 8 below.

[Table 8]

| [Redcap use cases] |
| --- |
| ● Connected industries |
|    ■ Sensors and actuators are connected to 5G networks and core |
|    ■ Include massive **IWSN (Industrial Wireless Sensor Network)** use cases and requirements |
|    ■ Not only URLLC services with very high requirements, but also relatively low-end services with the requirement of small device form factors with a battery life of several years |
|    ■ Requirements for these services are higher than LPWA (Low Power Wide Area, i.e. LTE-M/NB-IOT) but lower than URLCC and eMBB |
|    ■ Devices in such environment include e.g. pressure sensors, humidity sensors, thermometers, motion sensors, accelerometers, actuators, etc. |
| ● Smart city |
|    ■ The smart city vertical covers data collection and processing to more efficiently monitor and control city resources, and to provide services to city residents |
|    ■ Especially, the deployment of **surveillance cameras** is an essential part of the smart city but also of factories and industries |
| ● Wearables |
|    ■ Wearables use case includes **smart watches,** rings, eHealth related devices, and medical monitoring devices etc. |
|    ■ One characteristic for the use case is that the device is small in size |

The RedCap UE may operate based on Table 9 below.

[Table 9]

A UE with reduced capabilities (RedCap UE) supports all Layer-1 UE features that are mandatory without capability signalling, unless stated otherwise.

17.1 RedCap UE procedures

Procedures for a RedCap UE are same as described for a UE in all other clauses of this document unless stated otherwise. In this clause, the term 'UE' refers to a RedCap UE.

A UE expects the initial DL BWP and the active DL BWP after the UE (re)establishes dedicated RRC connection to be smaller than or equal to the maximum DL bandwidth that the UE supports. A UE can be provided a DL BWP by *initialDownlinkBWP-RedCap* in *DownlinkConfigCommonSIB,* and an UL BWP by *initialUplinkBWP-RedCap* in *UplinkConfigCommonSIB.* If *initialUplinkBWP* in *UplinkConfigCommonSIB* indicates an UL BWP that is larger than a maximum UL BWP that a UE supports, the UE expects to be provided an UL BWP by *initialUplinkBWP-RedCap* in *UplinkConfigCommonSIB* that is smaller than or equal to the maximum UL bandwidth that the UE supports.

For unpaired spectrum operation, a RedCap UE does not expect to receive a configuration where the center frequency for an initial DL BWP in which the UE is configured to monitor Type1-PDCCH CSS set is different than the center frequency for an initial UL BWP in which the RedCap UE may transmit Msg1/Msg3 or MsgA.

A UE can be provided by *BWP-DownlinkDedicated* a DL BWP, other than the initial DL BWP. A UE can be provided by *BWP-UplinkDedicated* an UL BWP, other than the initial UL BWP, that is smaller than or equal to the maximum UL bandwidth that the UE supports.

If a UE is provided an UL BWP by *initialUplinkBWP-RedCap* in *UplinkConfigCommonSIB* and is provided *rach-ConfigCommon* or *msgA-ConfigCommon* in *BWP-UplinkCommon* for the UL BWP, the UE uses corresponding parameters to perform the procedures in clauses 8.1, 8.1A, and 8.3; otherwise, the UE uses corresponding parameters from *rach-ConfigCommon* or *msgA-ConfigCommon* in *BWP-UplinkCommon* for the UL BWP provided by *initialUplinkBWP.*

If a UE is provided *initialUplinkBWP-RedCap* in *UplinkConfigCommonSIB* and does not have dedicated PUCCH resource configuration, the UE transmits PUCCH with HARQ-ACK information as described in clause 9.2.1 using a PUCCH resource set provided by *pucch-ResourceCommonRedCap,* except that frequency hopping for the PUCCH transmission is disabled if *intra-SlotFH* is present in *PUCCH-ConfigCommon.* If frequency hopping of the PUCCH transmission is disabled then, for the PUCCH transmission, the UE determines the initial cyclic shift index in the set of initial cyclic shift indexes as $r_{\mathrm{PUCCH}} \bmod N_{\mathrm{CS}}$ and determines the PRB index as

$$- \quad RB_{\mathrm{BWP}}^{\mathrm{offset}} + RB_{\mathrm{BWP}}^{\mathrm{offset\text{-}add}} + \lfloor r_{\mathrm{PUCCH}}/N_{\mathrm{CS}} \rfloor \text{ , if } \textit{intra-SlotFH = 'fromLowerEdge'}$$

$$- \quad N_{\mathrm{BWP}}^{\mathrm{size}} - RB_{\mathrm{BWP}}^{\mathrm{offset}} - RB_{\mathrm{BWP}}^{\mathrm{offset\text{-}add}} - 1 - \lfloor r_{\mathrm{PUCCH}}/N_{\mathrm{CS}} \rfloor ,$$

otherwise where $RB_{\mathrm{BWP}}^{\mathrm{offset\text{-}add}}$ is provided by *additionalPRBOffset,* if provided; otherwise,

$$RB_{\mathrm{BWP}}^{\mathrm{offset\text{-}add}} = 0 .$$

If a UE is not provided *initialUplinkBWP-RedCap* in *UplinkConfigCommonSIB* and does not have dedicated PUCCH resource configuration, the UE transmits PUCCH with HARQ-ACK information

---

as described in clause 9.2.1 using a PUCCH resource set provided by *pucch-ResourceCommonRedCap* if *pucch-ResourceCommonRedCap* is present or by *pucch-ResourceCommon* if *pucch-ResourceCommonRedCap* is absent. For an initial DL BWP provided by *initialDownlinkBWP-RedCap* in *DownlinkConfigCommonSIB,* if a UE in RRC_IDLE state or in RRC_INACTIVE state monitors PDCCH according to Type1-PDCCH CSS set and does not monitor PDCCH according to Type2-PDCCH CSS set, the UE does not expect the initial DL BWP to include SS/PBCH blocks and the CORESET with index 0.

For an active DL BWP not provided by *BWP-DownlinkDedicated,* if a UE does not indicate a capability to operate in the active DL BWP without receiving an SS/PBCH block, the UE in RRC_CONNECTED state assumes that the active DL BWP includes the SS/PBCH blocks that the UE used to obtain SIB1 and, for SS/PBCH block and CORESET multiplexing pattern 1, the CORESET with index 0.

(continued)

For an active DL BWP provided by *BWP-DownlinkDedicated,* unless a UE indicates a capability to operate in the active DL BWP without receiving an SS/PBCH block, the UE in RRC_CONNECTED state assumes that the active DL BWP includes the SS/PBCH blocks that the UE used to obtain SIB1 or the SS/PBCH blocks provided by *Non-CellDefiningSSB.* If the active DL BWP includes the SS/PBCH blocks that the UE used to obtain SIB1, for SS/PBCH block and CORESET multiplexing pattern 1, the UE expects the active DL BWP to include the CORESET with index 0. If the active DL BWP includes the SS/PBCH blocks provided by *NonCellDefiningSSB,* these SS/PBCH blocks and the SS/PBCH blocks that the UE used to obtain SIB1 have the same QCL properties, if they have the same index.

For a RedCap UE indicated presence of SS/PBCH blocks within an active DL BWP by *NonCellDefiningSSB,* collision handling between downlink receptions or uplink transmissions and the SS/PBCH blocks are same as described for a UE indicated presence of SS/PBCH blocks by *ssb-PositionsInBurst* in *SIB1* or in *ServingCellConfig-Common* described in all other clauses, unless otherwise stated.

For monitoring of a PDCCH candidate by a UE configured with *NonCellDefiningSSB,* if the UE

- does not monitor PDCCH candidates in a Type0-PDCCH CSS set, and

- at least one RE for a PDCCH candidate overlaps with at least one RE of a candidate SS/PBCH block corresponding to a SS/PBCH block index provided by *NonCellDefiningSSB,* the UE is not required to monitor the PDCCH candidate.

Operations based on embodiments of the present disclosure described below can be applied in combination with the definition/configuration/operation of Table 9. For example, DL operation/UL operation based on embodiments of the present disclosure described below may be based on the DL operation/UL operation defined in Table 9. However, the present disclosure is not limited thereto, and DL operation/UL operation based on embodiments of the present disclosure may include the DL operation/UL operation based on FIGS. 1 to 8 (e.g., UL/DL signaling of FIG. 3, SSB of FIG. 5, 4-step RACH procedure of FIG. 6, and 2step RACH procedure of FIG. 8).

The RedCap UE may have poor transmission and reception performance compared to the non-RedCap UE. A reduction in frequency diversity performance due to a reduction in a UE bandwidth is the main cause. As a supported UE bandwidth decreases, a performance decrease width further increases.

Considering wearables, massive wireless sensors, etc. which are RedCap main use cases, traffic congestion problems are expected because massive connection needs to be supported through a narrow bandwidth.

The present disclosure proposes a method for solving the above-mentioned problems, that is, a method of supporting UE frequency hopping (hereinafter FH) and supporting traffic offloading (hereinafter TO).

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

In the present disclosure, the narrowband may include meanings of a sub-band, a mini-band, a reduced-band, a sub-BWP, a resource block set (RB-set), and the like. For example, the narrowband in the interpretation/application of embodiments disclosed in the present disclosure may be changed to one of the terms listed above.

**Narrowband based operation**

Multiple narrowbands are predefined/preconfigured for FH/TO, and a UE performs the FH/TO using all or some narrowbands.

All the narrowbands may be characterized by having the same numerology (SCS, CP) and/or the same bandwidth.

The numerology (SCS, CP) of the narrowband may be predefined/preconfigured, or may be configured via system information (e.g., SIB1). Alternatively, (if there is no corresponding parameter in the configuration via the system information), the UE may assume a value such as a numerology of a BWP including the narrowband or an initial DL/UL BWP. Alternatively, an SCS for SIB1 reception indicated in an MIB may be assumed to be an SCS used in the narrowband.

The bandwidth of the narrowband may be less than or equal to a maximum UE bandwidth supported by a RedCap UE, and may be predefined in the spec or configured via PBCH (MIB, additional PBCH payload) or system information (e.g., SIB1).

If there are multiple maximum UE bandwidths, for example, if multiple RedCap UE types coexist and the maximum UE bandwidths supported by the RedCap UE types are different, the bandwidth of the narrowband may be set based on the smallest maximum UE bandwidth present in the corresponding cell. That is, in this case, the bandwidth of the narrowband may be set to be less than or equal to the smallest maximum UE bandwidth present in the corresponding cell.

The narrowband may be defined/configured within a specific frequency band. The specific frequency band for the narrowband configuration may include a specific NR operating band, a carrier bandwidth within the band, a BWP, etc. and may be separately configured via the system information (e.g., SIB1). Alternatively, without the separate configuration for the specific frequency band for the narrowband definition/configuration, or when there is no parameter for configuration, the UE may consider the initial DL/UL BWP as the specific frequency band for the narrowband definition/configuration. The initial DL BWP may include CORESET 0 bandwidth configured in the MIB.

The narrowband may be defined/configured in the following method within the specific frequency band. All examples of the methods proposed below assumed that the specific frequency band is 20 MHz (106 RBs) and the narrowband is 5 MHz (25 RBs) for convenience of the comparison.

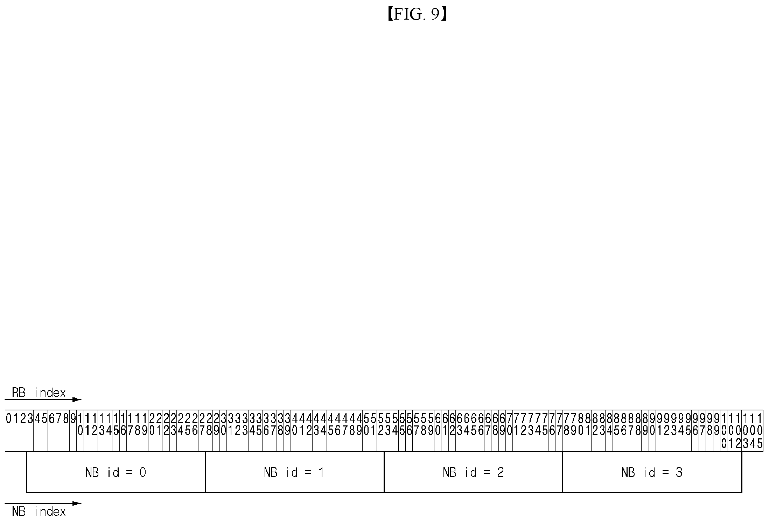

Hereinafter, methods 2-1 to 2-4 for configuring the narrowband are described in detail with reference to FIGS. 9 to 12.

FIG. 9 illustrates narrowbands according to a first embodiment of the present disclosure. More specifically, FIG. 9 illustrates narrowbands deployed based on Method 2-1 below.

**Method 2-1**

According to the present embodiment, narrowbands may be configured/deployed based on the following rule or order.

The narrowbands are consecutively deployed within the specific frequency band (e.g., 106 RBs). If there are extra RBs (i.e., RBs that do not belong to the narrowbands among the 106 RBs), these RBs may be deployed based on the following rule/order.

  1) These RBs are deployed to be evenly distributed at both edges within the specific frequency band
  2) If there is one extra RB after the 1) above, the RB is deployed in the center of the specific frequency band

Referring to FIG. 9, narrowbands consisting of 25 RBs are consecutively deployed within a specific frequency band (NB id=0 to NB id=3). Six RBs that do not belong to the narrowbands are evenly deployed at both edges. Specifically, three RBs are deployed at RB index 0 to RB index 2, and the remaining three RBs are deployed at RB index 103 to RB index 105.

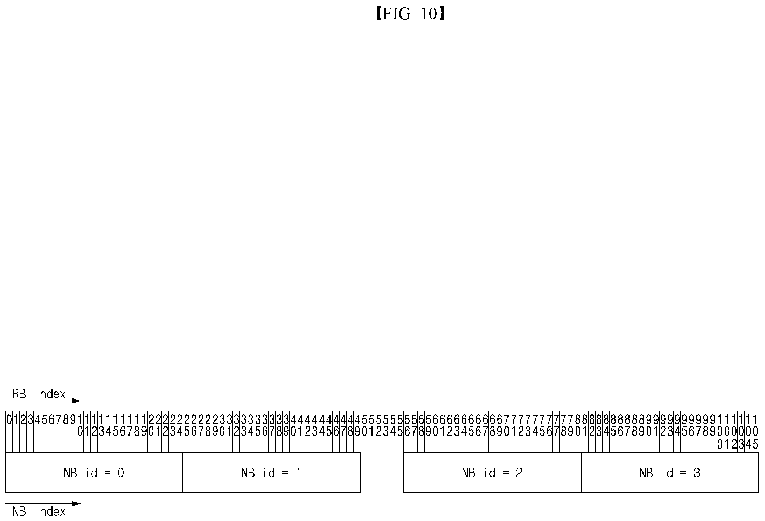

In the present disclosure, the expression 'narrowbands are consecutively deployed' may mean that RB indices belonging to the narrowbands are consecutive in a range excluding RBs that do not belong to the narrowbands in the specific frequency band. This is described below with reference to FIG. 10 as an example.

For example, assuming that there are two contiguous narrowbands (e.g., NB id=0 and NB id =1 in FIG. 10), a last RB index (e.g., 24) of a first narrowband and a first RB index (i.e., 25) of a second narrowband are consecutive.

For example, assuming that there are two contiguous narrowbands (e.g., NB id=1 and NB id =2 in FIG. 10), a last RB index (e.g., 49) of a first narrowband and a first RB index (e.g., 56) of a second narrowband in a range excluding RBs (RB indices 50 to 55) that do not belong to the narrowbands are consecutive.

FIG. 10 illustrates narrowbands according to a second embodiment of the present disclosure. More specifically, FIG. 10 illustrates narrowbands deployed based on Method 2-2 below.

**Method 2-2**

According to the present embodiment, narrowbands may be configured/deployed based on the following rule or order.

The narrowbands are consecutively deployed within the specific frequency band (e.g., 106 RBs). If there are extra RBs (i.e., RBs that do not belong to the narrowbands among the 106 RBs), all the RBs are deployed in the center within the specific frequency band.

Referring to FIG. 10, narrowbands consisting of 25 RBs are consecutively deployed within a specific frequency band (NB id=0 to NB id=3). Six RBs that do not belong to the narrowbands are deployed in the center. Specifically, the six RBs are deployed at RB index 50 to RB index 55.

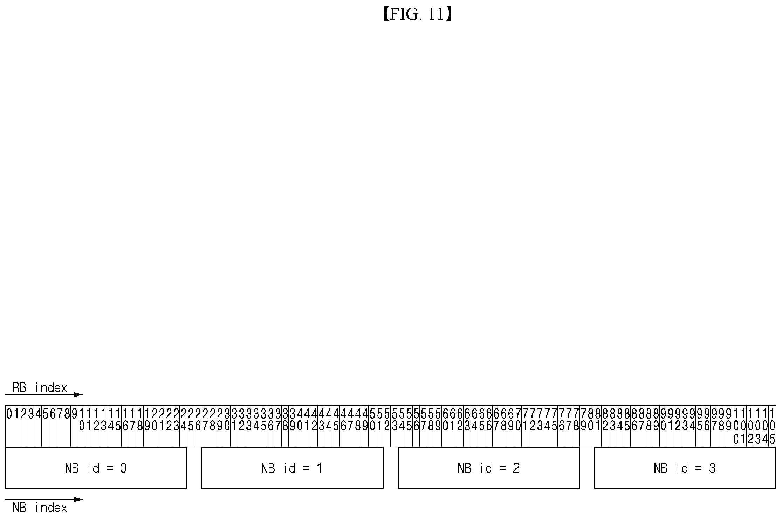

FIG. 11 illustrates narrowbands according to a third embodiment of the present disclosure. More specifically, FIG. 11 illustrates narrowbands deployed based on Method 2-3 below.

**Method 2-3**

According to the present embodiment, narrowbands may be configured/deployed based on the following rule or order.

The narrowbands are consecutively deployed within the specific frequency band (e.g., 106 RBs). If there are extra RBs (i.e., RBs that do not belong to the narrowbands among the 106 RBs), these RBs may be deployed based on the following rule/order.

1) These RBs are deployed to be distributed as evenly as possible among the narrowband
2) If there are extra RB(s) after the 1) above, the RBs are deployed to be evenly distributed at both edges within the specific frequency band
3) If there is one extra RB after the 1) and the 2) above, the RB is deployed in the center of the specific frequency band

Referring to FIG. 11, narrowbands consisting of 25 RBs are consecutively deployed within a specific frequency band (NB id=0 to NB id=3). Six RBs that do not belong to the narrowbands are deployed based on the 1) to 3) of the Method 2-3. Based on the 1) of the Method 2-3, the six RBs are evenly distributed such that two RBs are deployed between the narrowbands. Specifically, i) two RBs are deployed at location of RB index 25 and RB index 26 between the narrowbands (NB id=0 and NB id=1), ii) two other RBs are deployed at location of RB index 52 and RB index 53 between the narrowbands (NB id=1 and NB id=2), and iii) remaining two RBs are deployed at location of RB index 79 and RB index 80 between the narrowbands (NB id=2 and NB id=3).

As an additional example, it may be assumed that the number of RBs that do not belong to four narrowbands deployed consecutively is eight. Except for the six RBs that are evenly deployed between the narrowbands as in the above method, the remaining two RBs may be evenly deployed at both edges of the specific frequency band based on the 2) of the Method 2-3, respectively. Specifically, one of the two RBs may be deployed at a first RB index (e.g., RB index 0) of the specific frequency band, and the other may be deployed at a last RB index (i.e., RB index 105) of the specific frequency band.

As an additional example, it may be assumed that the number of RBs that do not belong to four narrowbands deployed consecutively is nine. Except for the eight RBs that are deployed based on the 1) and 2) of the Method 2-3, the remaining one RB may be deployed in the center of the specific frequency band based on the 3) of the Method 2-3.

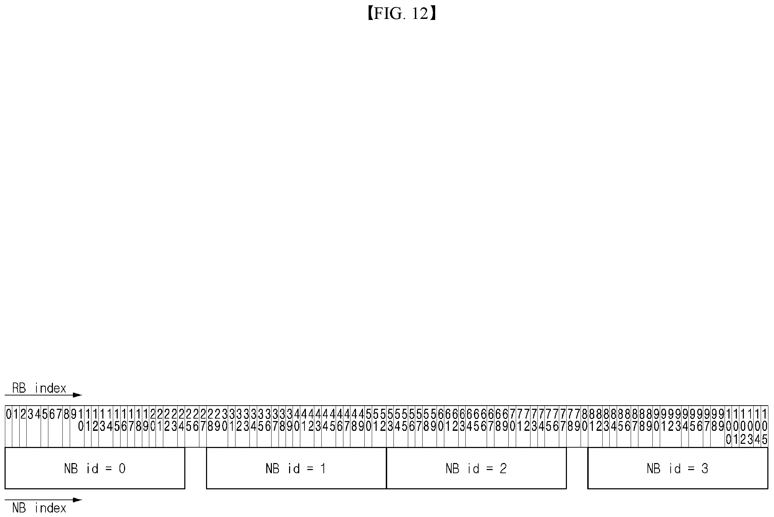

FIG. 12 illustrates narrowbands according to a fourth embodiment of the present disclosure. More specifically, FIG. 12 illustrates narrowbands deployed based on Method 2-4 below.

**Method 2-4**

According to the present embodiment, narrowbands may be configured/deployed based on the following rule or order.

The narrowbands are consecutively deployed within the specific frequency band (e.g., 106 RBs). If there are extra RBs (i.e., RBs that do not belong to the narrowbands among the 106 RBs), these RBs may be deployed based on the following rule/order.

1) The RBs are deployed as symmetrical as possible around the center of the specific frequency band
2) If there is one extra RB after the 1) above, the RB is deployed in the center of the specific frequency band

Referring to FIG. 12, narrowbands consisting of 25 RBs are consecutively deployed within a specific frequency band (NB id=0 to NB id=3). Six RBs that do not belong to the narrowbands are deployed based on the 1) and 2) of the Method 2-4. Based on the 1) of the Method 2-4, the six RBs are symmetrically deployed around the center of the specific frequency band. Specifically, centering the center (location between RB index 52 and RB index 53) of the specific frequency band, three RBs are deployed at RB indices 25 to 27, and the remaining three RBs are deployed at RB indices 78 to 80 which are symmetrical to the RB indices 25 to 27.

As an additional example, it may be assumed that the number of RBs that do not belong to four narrowbands deployed consecutively is seven. Except for the six RBs that are symmetrically deployed as in the above method, the remaining one RB may be deployed in the center of the specific frequency band based on the 2) of the Method 2-4.

The Method 2-4 has the following advantages over the Method 2-3. The deployment of the extra RBs does not need to be performed so as to be evenly distributed among narrowbands. That is, if the deployment of the extra RBs is symmetric about the center of the specific frequency band, a more flexible definition/configuration is possible.

Based on at least one of the above-described methods 2-1 to 2-4, an operation/configuration for performing frequency hopping (FH)/traffic offloading (TO) may be performed. Specifically, the base station may define/configure narrowbands for the FH/TO based on at least one of the methods 2-1 to 2-4. The UE may perform the FH based on a specific order using all or part of the narrowbands defined/configured by the

Embodiments related to the order of the FH are described below.

**Method 2-5**

The base station may define narrowband indices in ascending (and/or descending) order of the RB indices for narrowbands defined/configured based on the above-described methods (methods 2-1 to 2-4) (implicit narrowband indexing) (FIGS. 9 to 12). The base station may indicate the FH order to the UE in order of narrowband indices.

The present embodiment has the advantage that no separate signaling for indicating the FH order is needed. That is, since the FH order is determined in ascending and/or descending order of the RB indices based on the definition/configuration of the narrowbands, the base station does not need to perform separate signaling for the FH order on the UE.

The UE may determine the FH order for DL/UL transmission in ascending order (and/or descending order) of the narrowband indices determined by the narrowband definition/configuration method.

**Method 2-6**

The base station may explicitly configure/allocate narrowband indices to narrowbands defined/configured in the above methods. If the narrowband indexing method used in the Method 2-5 is an implicit indexing method, the present embodiment (Method 2-6) may be distinguished as an explicit narrowband indexing method.

Specifically, the base station may configure the narrowband indices considering frequency diversity gain, scheduling complexity, etc.

For example, the narrowband indexing may be performed as follows.

In the above examples, it is assumed that implicit narrowband indices of narrowbands when the implicit indexing method has been applied are {0,1,2,3}. The base station may explicitly configure narrowband index values respectively corresponding to the implicit narrowband indices to perform the explicit narrowband indexing. The configuration may be performed based on system information (e.g., SIB1) or UE-specific/dedicated RRC signaling. The base station may define a parameter (e.g., narrowbandIndex) for the narrowband indexing to the system information or an RRC message. The parameter may include information on the narrowband index values respectively corresponding to the implicit narrowband indices.

For example, the narrowband indices corresponding to the implicit narrowband indices {0,1,2,3} may be set to {0,2,1,3} (e.g., the parameter narrowbandIndex is set to {0,2,1,3}). The actual FH order may proceed in ascending order of the set narrowband indices. Specifically, the FH may be performed in ascending order of the set narrowband indices ($0 \rightarrow 1 \rightarrow 2 \rightarrow 3 \rightarrow 0$ ...). In this instance, the FH may be performed in order of $0 \rightarrow 2 \rightarrow 1 \rightarrow 3, \rightarrow 0$ .., based on the implicit narrowband index.

Alternatively, in the above example, the FH order may be configured based on the implicit narrowband index. For example, it is assumed that the narrowband indices corresponding to the implicit narrowband indices {0,1,2,3} are set to {0,2, 1,3} The FH may be performed in order of the set narrowband indices ($0 \rightarrow 2 \rightarrow 1 \rightarrow 3 \rightarrow 0$ ...). In this instance, the FH may be performed in order of $0 \rightarrow 1 \rightarrow 2 \rightarrow 3, \rightarrow 0$ .., based on the implicit narrowband index.

In the explicit narrowband indexing method (Method 2-6), if the set narrowband index (narrowbandIndex) has a specific value, a narrowband having the corresponding index may be configured not to be used for the FH. For example, the base station may configure narrowband indices for the FH so that a narrowband having a specific value is not used for the FH.

For example, this is described in detail below on the assumption that narrowband indices 'narrowbandIndex' corresponding to implicit narrowband indices {0,1,2,3} are set to {0,2,1,3}. It may be configured so that narrowbands with the narrowbandindex of 1 and 3 are not used for the FH. Specifically, when narrowband indices for the FH are configured, the base station may set the narrowbandIndex corresponding to the implicit narrowband indices {0,1,2,3} to {0, 2, NA, NA}. The FH may be performed based on the set narrowband indices as follows.

For example, the FH order may be determined in ascending order of the set narrowband indices.

Based on the set narrowband indices, the FH may be performed in order of $0 \rightarrow 2 \rightarrow 0 \rightarrow 2 \rightarrow 0$,.. Based on the implicit narrowband index, the FH may be performed in order of $0 \rightarrow 1 \rightarrow 0 \rightarrow 1 \rightarrow 0$..

The narrowbands excluded from the FH are only excluded from the FH operation and may be used by the UE. As an example, the narrowbands excluded from the FH may be used for DL/UL transmission related to a RedCap UE that does not perform the FH. For example, the narrowbands excluded from the FH may be used for DL/UL transmission related to a non-RedCap UE.

For example, the base station may configure/indicate, to the UE, parameters for the FH/TO via RRC signaling (e.g., dedicated/UE-specific RRC signaling) so as to support the FH/TO in a connected mode (e.g., RRC connected state/mode) of the UE. The parameters may be related to at least one of i) narrowband configuring, ii) FH enable/disable, iii) FH order if the FH is enabled, and/or iv) FH interval.

For example, the base station may support FH/TO activation/deactivation mechanism via DCI or MAC CE.

The latter (i.e., the latter of the configuration via RRC signaling and the activation/deactivation via DCI/MAC CE) may have the effect of allowing more efficient use of resources as a whole by allowing the base station to adaptively support the FH/TO based on a traffic situation of the corresponding cell.

For example, the base station may determine whether to apply the FH/TO based on a ratio of the RedCap UE and the non-RedCap UE and indicate the FH/TO through the activation/deactivation mechanism.

Alternatively, in order to support the FH from an initial access procedure or even in an idle/inactive mode, the base station may indicate parameters for supporting the FH/TO to the UE via the system information (e.g., SIB1). And/or, the base station may configure/indicate, to the UE, parameters for the above-described FH/TO via an RRC release message so as to support the FH in the inactive mode.

In order to efficiently utilize the multiple narrowbands configured for the FH/TO in terms of load distribution and/or minimizing inter-cell interference, the following methods may be considered.

The base station may indicate a starting narrowband to the UE via dynamic L1/L2 signaling (DCI, MAC CE, etc.). Further, for an idle/inactive UE, the starting narrowband may be determined based on a UE ID and/or a cell ID of a cell to be camped on/accessed/re-accessed.

The narrowbands after the starting narrowband may be determined by FH enable/disable, FH order, and the like. If the FH is enabled, each FH time (i.e., time at which the frequency hopping is performed) may be determined based on i) an FH reference point, ii) a time offset from the FH reference point, and iii) a set or pre-defined FH interval value.

The FH reference point may be a reception time of dynamic L1/L2 signaling (DCI, MAC CE, etc.) indicating the starting narrowband. For example, the FH reference point may be the following i) or ii).

i) a last OFDM symbol or a first OFDM symbol of OFDM symbols in which DCI indicating the starting narrowband is transmitted
ii) a slot including the last OFDM symbol or the first OFDM symbol

The UE may perform the FH after a time offset (indicated/configured/predefined in units of slot/OFDM symbol/absolute time) based on the FH reference point.

The FH interval means a time interval in units of slot/OFDM symbol/absolute time (e.g., in ms) at which the FH occurs in a state in which the FH is enabled.

For example, the FH interval may be predefined in the specification. Specifically, the FH interval may be defined in the UE/base station in the UE/base station implementation.

For example, the FH interval may be configured by the base station via RRC signaling (e.g., UE-specific/dedicated RRC signaling). Specifically, the FH interval may be configured based on frequency diversity gain, channel estimation performance, scheduling complexity, and the like.

For example, the parameters for the FH/TO including the FH reference point and the FH interval described above may be cell-specifically defined/configured. In this case, all UEs that are FH enable may perform (synchronous) FH in synchronization with a cell-specifically defined time irrespective of time at which DL/UL scheduling information is received. According to the present embodiment, the following effects are derived. The present embodiment can facilitate base station scheduling in the FH enable and reduce signaling overhead indicating the FH time.

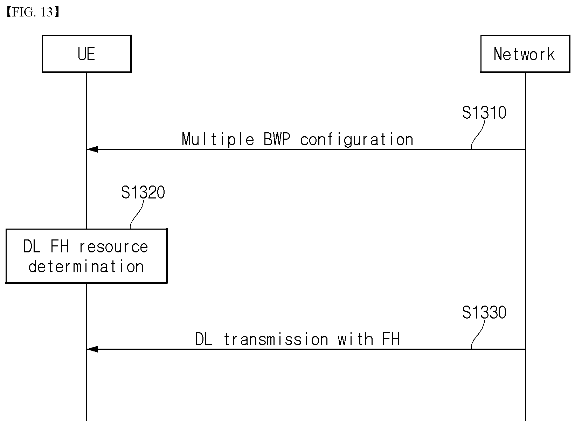

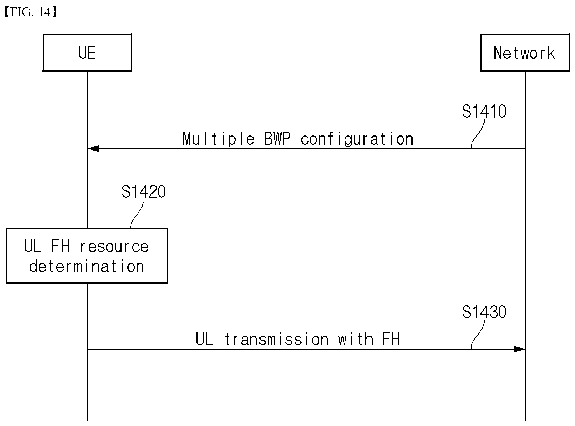

The proposed methods according to the present disclosure described above can be applied to DL operation and/or UL operation. This is described below with reference to FIGS. 13 and 14.

FIG. 13 is a flowchart illustrating a downlink operation according to an embodiment of the present disclosure. The embodiments described above can be applied to DL operation of a UE/base station (network).

In S1310, a UE receives multiple BWP configuration from a base station. The multiple BWP configuration may include information based on at least one of the above-described methods 2-1 to 2-6.

For example, the multiple BWP configuration may include i) configuration information of a plurality of narrowbands and/or ii) information related to frequency hopping (FH).

The configuration information of the plurality of narrowbands may include configuration related to narrowbands defined based on at least one of the methods 2-1 to 2-4. For example, the configuration information of the plurality of narrowbands may include information on at least one of i) numerology of the narrowbands (e.g., subcarrier spacing configuration (SCS), cyclic prefix (CP)), ii) a bandwidth of the narrowbands (e.g., 100 MHz, 20 MHz, 5 MHz, 3 MHz or 1 MHz, etc.), iii) a frequency band (e.g., NR operating band, carrier bandwidth, or BWP) in which the plurality of narrowbands are defined, and/or iv) indices of the plurality of narrowbands (e.g., explicit narrowband indices).

The above-described implicit narrowband indices may be determined based on the configuration information of the plurality of narrowbands. Based on the Method 2-5, the order for the FH may be determined in ascending and/or descending order of the implicit narrowband indices. In this case, an index for the FH described later may not be included in the multiple BWP configuration.

For example, the information related to the frequency hopping (FH) may include at least one of i) indices for the plurality of narrowbands for the FH (e.g., explicit narrowband indices), ii) information (FH enable/disable) representing whether the frequency hopping is enabled or disabled, iii) FH order, and/or iv) an FH interval.

The indices for the plurality of narrowbands for the FH may be narrowband indices (e.g., {0, 2, 1, 3}) configured to correspond to the implicit narrowband indices (e.g., {0, 1, 2, 3}) (the Method 2-6). In this instance, the FH order may be the order determined based on the configured narrowband indices or the implicit narrowband indices.

For example, the FH order may be the order determined in ascending and/or descending order of the configured narrowband indices (e.g., {0, 2, 1, 3}) (e.g., $0 \rightarrow 1 \rightarrow 2 \rightarrow 3 \rightarrow 0$.. based on the configured narrowband indices/$0 \rightarrow 2 \rightarrow 1 \rightarrow 3 \rightarrow 0$.. based on the implicit narrowband indices).

For example, the FH order may be the order determined in ascending and/or descending order of the implicit narrowband indices (e.g., $0 \rightarrow 1 \rightarrow 2 \rightarrow 3 \rightarrow 0$.. based on the implicit narrowband indices/$0 \rightarrow 2 \rightarrow 1 \rightarrow 3 \rightarrow 0$.. based on the configured narrowband indices).

In S1320, the UE determines resource(s) for downlink frequency hopping (DL FH resource(s)). The DL FH resource(s) may be determined based on the multiple BWP configuration.

In S1330, the base station performs downlink transmission based on the frequency hopping. Specifically, the UE receives a downlink signal from the base station based on the determined DL FH resource(s).

FIG. 14 is a flowchart illustrating an uplink operation according to another embodiment of the present disclosure. The embodiments described above can be applied to UL operation of a UE/base station (network).

Hereinafter, descriptions overlapping with those described with reference to FIG. 13 will be omitted.

In S1410, a UE receives multiple BWP configuration from a base station. The multiple BWP configuration may include information based on at least one of the above-described methods 2-1 to 2-6. Since the S1410 corresponds to the S1310 of FIG. 13, a redundant description is omitted.

In S1420, the UE determines resource(s) for uplink frequency hopping (UL FH resource(s)). The UL FH resource(s) may be determined based on the multiple BWP configuration.

In S1430, the base station performs uplink transmission based on the frequency hopping. Specifically, the UE transmits an uplink signal to the base station based on the determined UL FH resource(s).

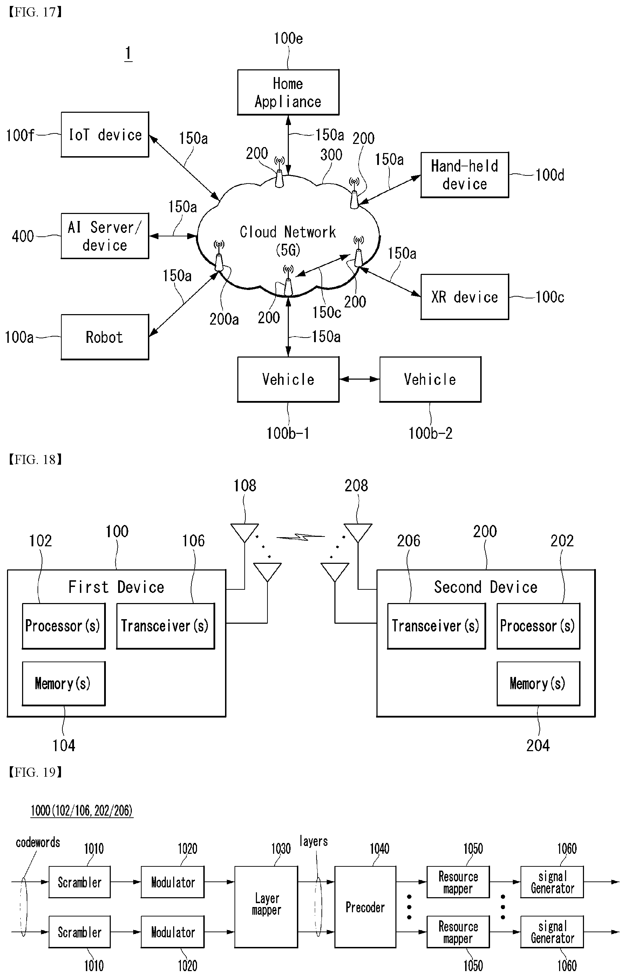

From an implementation perspective, the operations (DL/UL operations related to the narrowband based on at least one of the methods 2-1 to 2-6) of the UE/base station according to the above-described embodiments can be processed by a device (e.g., processors 102 and 202 of FIG. 18) of FIGS. 17 to 21 described later.

Further, the operations (DL/UL operations related to the narrowband based on at least one of the methods 2-1 to 2-6) of the UE/base station according to the above-described embodiments can be stored in a memory (e.g., memories 104 and 204 of FIG. 18) in the form of commands/programs (e.g., instructions, executable codes) for running at least one processor (e.g., processors 102 and 202 of FIG. 18).

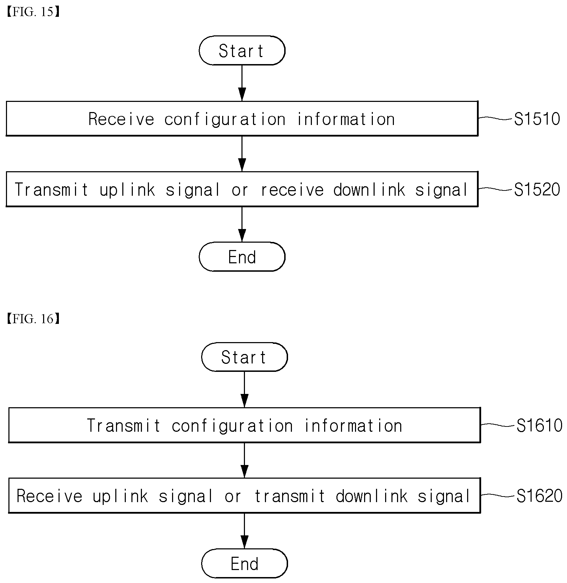

Below, the above-described embodiments are described in detail from a UE/BS operation perspective with reference to FIGS. 15 and 16. Methods described below are merely distinguished for convenience of explanation. Thus, it is obvious that partial configuration of any method can be substituted or combined with partial configuration of another method.

FIG. 15 is a flowchart illustrating a method performed by a UE in a wireless communication system according to an embodiment of the present disclosure.

Referring to FIG. 15, a method performed by a UE in a wireless communication system according to an embodiment of the present disclosure comprises a step S1510 of receiving configuration information and a step S1520 of transmitting an uplink signal or receiving a downlink signal.

In the following description, a 'UE' may refer to a 'UE with reduced capability (RedCap UE)', but is not limited thereto. For example, the 'UE' may refer to a 'UE that supports DL/UL operation based on frequency hopping'.

In the step S1510, the UE receives configuration information related to a frequency band from a base station.

For example, the configuration information may be based on a master information block (MIB) or a system information block (SIB) (e.g., SIB1). Specifically, the UE may receive SIB1 from the base station. The SIB1 may include the configuration information. The configuration information may be based on redCap-ConfigCommon of the SIB1.

The configuration information may include information based on at least one of the methods 2-1 to 2-6. For example, the configuration information may include i) configuration information of a plurality of narrowbands and/or ii) information related to frequency hopping (FH). The configuration information of the plurality of narrowbands and the information related to the frequency hopping are the same as those described in the step S1310 of FIG. 13, and thus redundant description is omitted.

In the step S1520, the UE transmits an uplink signal to the base station or receives a downlink signal from the base station based on frequency hopping related to the frequency band.

Here, an operation of 'transmitting the uplink signal/receiving the downlink signal based on the frequency hopping' may mean an operation of 'transmitting the uplink signal/receiving the downlink signal in uplink resources/downlink resources determined based on the frequency hopping.'

The frequency band may be based on at least one of i) an operating band of an NR system (NR operating band), ii) a carrier bandwidth within the frequency band, and/or iii) a bandwidth part (BWP). For example, the frequency band may be based on an initial DL/UL BWP (or an active DL/UL BWP).

The frequency band may refer to a band in which the plurality of narrowbands are defined/configured, as described below. For example, the frequency band may be 20 MHz (106 RBs), and each narrowband may be 5 MHz (25 RBs). For example, the frequency band may be 100 MHz, and each narrowband may be 20 MHz.

The uplink signal may be a physical channel, a physical signal, and/or a message based on at least one of FIGS. 1 to 8 and/or Table 9. For example, the uplink signal may be based on at least one of a physical uplink shared channel (PUSCH), a physical uplink control channel (PUCCH), a random access preamble (e.g., MsgA of 2-step RACH or Msg1 of 4-step RACH), and/or a sounding reference signal (SRS).

The downlink signal may be a physical channel, a physical signal, and/or a message based on at least one of FIGS. 1 to 8 and/or Table 9. For example, the downlink signal may be based on at least one of a physical downlink shared channel (PDSCH), a physical downlink control channel (PDCCH), a random access response (e.g., RAR of 2-step RACH or 4-step RACH), a synchronization signal block (SSB) (or SS/PBCH block), and/or a channel state information-reference signal (CSI-RS).

According to an embodiment, the frequency hopping may be performed based on the plurality of narrowbands included in the frequency band.

For example, a bandwidth of each of the plurality of narrowbands may be based on a maximum bandwidth supported by the UE. As a specific example, the bandwidth of each narrowband may be less than or equal to the maximum bandwidth. When the maximum bandwidth is different for each of the uplink and downlink, the maximum bandwidth may include a maximum DL bandwidth and/or a maximum UL bandwidth.

As described above, the narrowband may be changed to a sub-band, a mini-band, a reduced-band, a sub-BWP, or a resource block (RB) set. For example, the plurality of narrowbands may be changed to a plurality of RB sets.

One or more resource blocks (RBs) that do not belong to the plurality of narrowbands within the frequency band may be deployed based on at least one of i) between contiguous narrowbands, ii) both edges of the frequency band, and/or iii) a center of the frequency band. The deployment of the one or more RBs may be based on one of the methods 2-1 to 2-4.

For example, the one or more RBs may be deployed based on the method 2-1. Specifically, the one or more RBs may be evenly deployed at both edges of the frequency band.

There may be a remaining RB even after the deployment described above. For example, if the number of one or more RBs is odd, one RB may remain after the one or more RBs are evenly deployed at both edges of the frequency band. In this case, the following operation may be performed.

The one RB remaining after the one or more RBs are evenly deployed at both edges of the frequency band may be deployed in the center of the frequency band.

For example, the one or more RBs may be deployed based on the method 2-2. Specifically, the one or more RBs may be deployed based on the center of the frequency band (see FIG. 10).

For example, the one or more RBs may be deployed based on the method 2-3. Specifically, the one or more RBs may be evenly deployed between the contiguous narrowbands (e.g., NB id=0 and NB id =1 in FIG. 11).

There may be remaining RB(s) (hereinafter, first RB(s)) even after the deployment described above. For example, two RBs (two first RBs) may remain after eight RBs are evenly deployed between four narrowbands, two RBs each between contiguous narrowbands. In this case, the following operation may be performed.

One or more first RBs remining after the one or more RBs are evenly deployed between the contiguous narrowbands may be evenly deployed at both edges of the frequency band.

There may be a remaining RB even after the deployment described above. For example, if the number of one or more first RBs is odd, one first RB may remain after the first RBs are evenly deployed at both edges of the frequency band. In this case, the following operation may be performed.

The one RB remaining after the one or more first RBs are evenly deployed at both edges of the frequency band may be deployed in the center of the frequency band.

For example, the one or more RBs may be deployed based on the method 2-4. Specifically, the one or more RBs may be symmetrically deployed based on the center of the frequency band.

There may be a remaining RB even after the deployment described above. For example, if the number of one or more RBs is odd, one RB may remain after the one or more RBs are symmetrically deployed based on the center of the frequency band. In this case, the following operation may be performed.

The one RB remaining after the one or more RBs are symmetrically deployed based on the center of the frequency band may be deployed in the center of the frequency band.

According to an embodiment, the frequency hopping may be performed in order based on an ascending order or a descending order of indices for the plurality of narrowbands. This embodiment may be based on the method 2-5 or the method 2-6.

As an example, the order for the frequency hopping may be based on an implicit narrowband index (the method 2-5). Specifically, the indices for the plurality of narrowbands may be determined based on an ascending order or a descending order of resource block (RB) indices. If the number of the plurality of narrowbands is four, the indices for the plurality of narrowbands may be determined as {0, 1, 2, 3}.

As another example, the order for the frequency hopping may be based on an explicit narrowband index configured in a narrowband (the method 2-6). Specifically, the indices for the plurality of narrowbands may be determined based on the configuration information. An index of one or more narrowbands among the indices for the plurality of narrowbands may be configured to be excluded from the frequency hopping. This embodiment is described below based on an example where the number of the plurality of narrowbands is four.

The indices for the plurality of narrowbands may be configured to correspond to indices (e.g., implicit narrowband indices {0, 1, 2, 3}) determined in the ascending order or the descending order of the RB indices. The indices for the plurality of narrowbands may be configured to {0, 2, 1, 3}. In this case, narrowbands corresponding to the implicit narrowband indices {2, 3} may be configured to be excluded from the frequency hopping. In this case, the indices for the plurality of narrowbands may be configured to {0, 2, NA, NA}.

The frequency hopping may be initiated/performed based on FH enable via RRC signaling or FH activation via dynamic signaling (DCI/MAC CE).

According to an embodiment, the frequency hopping may be performed based on i) RRC signaling, ii) downlink control information (DCI), or iii) medium access control-control element (MAC CE).

According to an embodiment, the method may further comprise a step of receiving configuration information related to the frequency hopping from the base station via the RRC signaling.

The configuration information related to the frequency hopping may include information representing whether the frequency hopping is enabled or not. The frequency hopping may be performed based on the frequency hopping being enabled.

For example, the configuration information related to the frequency hopping and the configuration information related to the frequency band may be received together. The configuration information related to the frequency hopping may be included in the configuration information related to the frequency band. That is, the configuration information related to the frequency hopping may be received together through reception of the configuration information (e.g., SIB1) related to the frequency band without additional RRC signaling.

According to an embodiment, the method may further comprise a step of receiving information related to the frequency hopping based on the DCI or the MAC CE. Specifically, the UE may receive the DCI or the MAC CE including the information related to the frequency hopping from the base station.

The information related to the frequency hopping may include information representing whether the frequency hopping is activated or deactivated. The frequency hopping may be performed based on the frequency hopping being activated.

According to an embodiment, the method may further comprise a step of receiving information indicating a starting narrowband for the frequency hopping. Specifically, the UE may receive the information indicating the starting narrowband for the frequency hopping from the base station. The frequency hopping may be performed based on a FH reference point and a FH interval. The FH reference point may be based on a time at which the information indicating the starting narrowband is received.

Below, the above-described embodiments are described in detail from a perspective of base station operation.

Steps S1610 and S1620 described below correspond to the steps S1510 and S1520 described with reference to FIG. 15. In addition, i) a step of transmitting configuration information related to the frequency hopping, ii) a step of transmitting information related to the frequency hopping, and iii) a step of transmitting information indicating a starting narrowband for the frequency hopping described below correspond to i) the step of receiving the configuration information related to the frequency hopping, ii) the step of receiving the information related to the frequency hopping, and iii) the step of receiving the information indicating the starting narrowband for the frequency hopping described with reference to FIG. 15.

Considering the above-described correspondence, redundant description is omitted. That is, the detailed description of the base station operation described below can be replaced with the description/embodiment of FIG. 15 corresponding to the base station operation. For example, the description/embodiment of the steps S1510 and S1520 in FIG. 15 may be additionally applied to the base station operation of the steps S1610 and S1620 described below. For example, the description/embodiment for i) the step of receiving the configuration information related to the frequency hopping, ii) the step of receiving the information related to the frequency hopping, and iii) the step of receiving the information indicating the starting narrowband for the frequency hopping in FIG. 15 may be additionally applied to i) the step of transmitting the configuration information related to the frequency hopping, ii) the step of transmitting the information related to the frequency hopping, and iii) the step of transmitting the information indicating the starting narrowband for the frequency hopping described below.

In the step S1610, a base station transmits configuration information related to a frequency band to a UE.

In the step S1620, the base station receives an uplink signal from the UE or transmits a downlink signal to the UE based on frequency hopping related to the frequency band.

The method may further comprise a step of transmitting configuration information related to the frequency hopping to the UE via RRC signaling.

The method may further comprise a step of transmitting information related to the frequency hopping to the UE based on DCI or MAC CE.

The method may further comprise a step of transmitting information indicating a starting narrowband for the frequency hopping to the UE.

The UE/base station operation in the descriptions with reference to FIGS. 15 and 16 can be implemented by a device of FIGS. 17 to 21 described below. This is described below with reference to FIG. 18.

For example, one or more processors 102 may control one or more transceivers 106 and/or one or more memories 104 to perform the UE operation described with reference to FIG. 15.

For example, one or more processors 202 may control one or more transceivers 206 and/or one or more memories 204 to perform the base station operation described with reference to FIG. 16.

## Example of communication system applied to present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 17 illustrates a communication system 1 applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2VyVehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR), such as uplink/downlink communication 150a, sidelink communication 150b (or, D2D communication), or inter BS communication (e.g. Relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Example of wireless device applied to the present disclosure.

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers, such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies, such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. From RF band signals into baseband signals in order to process received user data, control information, radio signals/channels, etc. using the one or more processors 102 and 202. The one or more transceivers 106 and 206 may convert the user data, control information, radio signals/channels, etc. Processed using the one or more processors 102 and 202 from the base band signals into the RF band signals. To this end, the one or more transceivers 106 and 206 may include (analog) oscillators and/or filters.

**Example of signal processing circuit applied to the present disclosure**

FIG. 19 illustrates a signal process circuit for a transmission signal.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources.

The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

**Example of application of wireless device applied to the present disclosure**

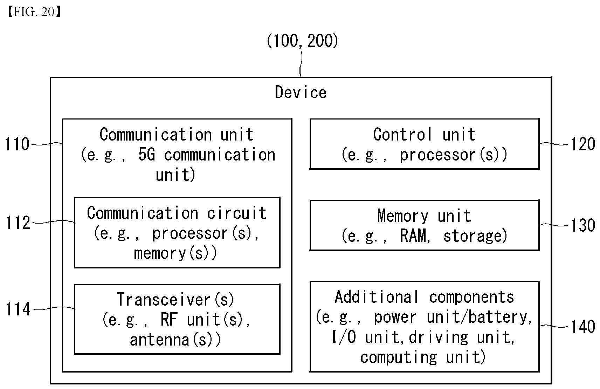

FIG. 20 illustrates another example of a wireless device applied to the present disclosure.

The wireless device may be implemented in various forms according to a use-case/service (refer to FIG. 17). Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Example of hand-held device applied to the present disclosure**

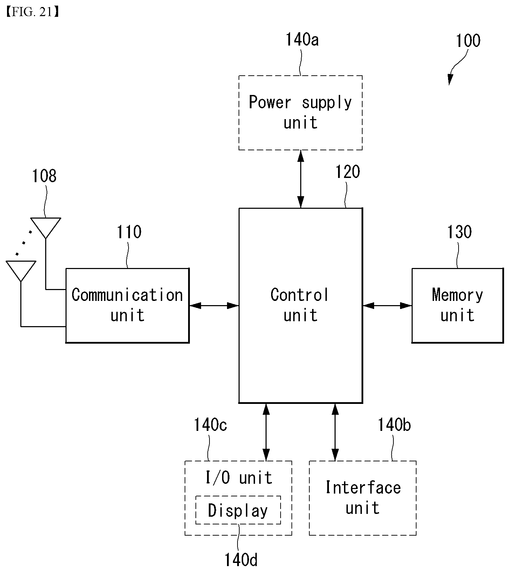

FIG. 21 illustrates a hand-held device applied to the present disclosure.

The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

1. A method performed by a user equipment in a wireless communication system, the method comprising:

   receiving, from a base station, configuration information related to a frequency band; and
   based on a frequency hopping related to the frequency band, transmitting an uplink signal to the base station or receiving a downlink signal from the base station,
   wherein the frequency hopping is performed based on a plurality of narrowbands included in the frequency band, and
   wherein one or more resource blocks (RBs) that do not belong to the plurality of narrowbands within the frequency band are deployed based on at least one of i) between contiguous narrowbands, ii) both edges of the frequency band, and/or iii) a center of the frequency band.

2. The method of claim 1, wherein the one or more RBs are evenly deployed at both edges of the frequency band.

3. The method of claim 2, wherein one RB remaining after the one or more RBs are evenly deployed at both edges of the frequency band is deployed in the center of the frequency band.

4. The method of claim 1, wherein the one or more RBs are deployed based on the center of the frequency band.

5. The method of claim 1, wherein the one or more RBs are evenly deployed between the contiguous narrowbands.

6. The method of claim 5, wherein one or more first RBs remining after the one or more RBs are evenly deployed between the contiguous narrowbands are evenly deployed at both edges of the frequency band.

7. The method of claim 6, wherein one RB remaining after the one or more first RBs are evenly deployed at both edges of the frequency band is deployed in the center of the frequency band.

8. The method of claim 1, wherein the one or more RBs are symmetrically deployed based on the center of the frequency band.

9. The method of claim 8, wherein one RB remaining after the one or more RBs are symmetrically deployed based on the center of the frequency band is deployed in the center of the frequency band.

10. The method of claim 1, wherein the frequency hopping is performed in an order based on an ascending order or a descending order of indices for the plurality of narrowbands.

11. The method of claim 10, wherein the indices for the plurality of narrowbands are determined based on an ascending order or a descending order of resource block (RB) indices.

12. The method of claim 10, wherein the indices for the plurality of narrowbands are determined based on the configuration information.

13. The method of claim 12, wherein an index of one or more narrowbands among the indices for the plurality of narrowbands is configured to be excluded from the frequency hopping.

14. The method of claim 1, wherein the frequency hopping is performed based on i) an RRC signaling, ii) downlink control information (DCI), or iii) a medium access control-control element (MAC CE).

15. The method of claim 14, further comprising receiving configuration information related to the frequency hopping from the base station via the RRC signaling,

   wherein the configuration information related to the frequency hopping includes information representing whether the frequency hopping is enabled or not, and
   wherein the frequency hopping is performed based on the frequency hopping being enabled.

16. The method of claim 14, further comprising receiving information related to the frequency hopping based on the DCI or the MAC CE,

   wherein the information related to the frequency hopping includes information representing whether the frequency hopping is activated or not, and
   wherein the frequency hopping is performed based on the frequency hopping being activated.

17. The method of claim 1, further comprising receiving information indicating a starting narrowband for the frequency hopping,

   wherein the frequency hopping is performed based on a frequency hopping (FH) reference point and a FH interval, and
   wherein the FH reference point is based on a time at which the information indicating the starting narrowband is received.

18. A user equipment operating in a wireless communication system, the user equipment comprising:

one or more transceivers;
one or more processors; and
one or more memories operably connectable to the one or more processors,
wherein the one or more memories store instructions that configure the one or more processors to perform operations based on being executed by the one or more processors,
wherein the operations comprise:

receiving, from a base station, configuration information related to a frequency band; and
based on a frequency hopping related to the frequency band, transmitting an uplink signal to the base station or receiving a downlink signal from the base station,
wherein the frequency hopping is performed based on a plurality of narrowbands included in the frequency band, and wherein one or more resource blocks (RBs) that do not belong to the plurality of narrowbands within the frequency band are deployed based on at least one of i) between contiguous narrowbands, ii) both edges of the frequency band, and/or iii) a center of the frequency band.

19. A device comprising:

one or more memories; and
one or more processors operably connected to the one or more memories,
wherein the one or more memories include instructions that configure the one or more processors to perform operations based on being executed by the one or more processors,
wherein the operations comprise:

receiving, from a base station, configuration information related to a frequency band; and
based on a frequency hopping related to the frequency band, transmitting an uplink signal to the base station or receiving a downlink signal from the base station,
wherein the frequency hopping is performed based on a plurality of narrowbands included in the frequency band, and
wherein one or more resource blocks (RBs) that do not belong to the plurality of narrowbands within the frequency band are deployed based on at least one of i) between contiguous narrowbands, ii) both edges of the frequency band, and/or iii) a center of the frequency band.

20. One or more non-transitory computer readable mediums storing one or more instructions,

wherein the one or more instructions executable by one or more processors configure the one or more processors to perform operations,
wherein the operations comprise:

receiving, from a base station, configuration information related to a frequency band; and
based on a frequency hopping related to the frequency band, transmitting an uplink signal to the base station or receiving a downlink signal from the base station,
wherein the frequency hopping is performed based on a plurality of narrowbands included in the frequency band, and
wherein one or more resource blocks (RBs) that do not belong to the plurality of narrowbands within the frequency band are deployed based on at least one of i) between contiguous narrowbands, ii) both edges of the frequency band, and/or iii) a center of the frequency band.

21. A method performed by a base station in a wireless communication system, the method comprising:

transmitting, to a user equipment (UE), configuration information related to a frequency band; and
based on a frequency hopping related to the frequency band, receiving an uplink signal from the UE or transmitting a downlink signal to the UE,
wherein the frequency hopping is performed based on a plurality of narrowbands included in the frequency band, and

EP 4 518 540 A1

wherein one or more resource blocks (RBs) that do not belong to the plurality of narrowbands within the frequency band are deployed based on at least one of i) between contiguous narrowbands, ii) both edges of the frequency band, and/or iii) a center of the frequency band.

22. A base station operating in a wireless communication system, the base station comprising:

one or more transceivers;
one or more processors; and
one or more memories operably connectable to the one or more processors,
wherein the one or more memories store instructions that configure the one or more processors to perform operations based on being executed by the one or more processors,
wherein the operations comprise:

transmitting, to a user equipment (UE), configuration information related to a frequency band; and
based on a frequency hopping related to the frequency band, receiving an uplink signal from the UE or transmitting a downlink signal to the UE,
wherein the frequency hopping is performed based on a plurality of narrowbands included in the frequency band, and
wherein one or more resource blocks (RBs) that do not belong to the plurality of narrowbands within the frequency band are deployed based on at least one of i) between contiguous narrowbands, ii) both edges of the frequency band, and/or iii) a center of the frequency band.

32

【FIG. 1】

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot (URLLC)

Mini-Slot={2,4,7} Symbols

【FIG. 2】

1 subframe = $14 \cdot 2^{\mu}$ OFDM symbols

$k = N^{size, \mu}_{grid} N^{RB}_{sc} - 1$

$N^{size, \mu}_{grid} N^{RB}_{sc}$ subcarriers

1 resource block = $N^{RB}_{sc}$ subcarriers

Resource element $(k, l)$

$k = 0$

$l = 0$

$l = 14 \cdot 2^{\mu} - 1$

【FIG. 3】

INITIAL CELL SEARCH | SYSTEM INFORMATION RECEPTION | RANDOM ACCESS PROCEDURE | GENERAL DL/UL Tx/Rx

PSS/SSS& [DLRS]& PBCH — S301

PDCCH/ PDSCH (BCCH) — S302

PRACH — S303

PDCCH/ PDSCH — S304

PUSCH — S305

PDCCH/ PDSCH — S306

PDCCH/ PDSCH — S307

PUSCH/ PUCCH — S308

· DL/UL ACK/NACK
· UE CQI/PMI RI REPORT
  USING PUSCH AND PUCCH

【FIG. 4】

【FIG. 5】

SSB periodicity(default:20ms)

5ms
window

SSB#1    SSB#2    ・・・    SSB#L

SSB burst set

【FIG. 6】

UE                                                                    BS

601
Msg1 : random access preamble

603
Msg2 : random access response

605
Msg3 : scheduled transmission on PUSCH

607
Msg4 : contention resolution

【FIG. 7】

Msg.2:RA response    Msg.4:RRC connection setup

BS

No response    No response

Power Ramping    Power Ramping    ...

UE

Msg.1    Msg.3: RRC connection Request    RRC connected

【FIG. 8】

(a)

(b)

【FIG. 9】

【FIG. 10】

EP 4 518 540 A1

RB index →

0123456789111111111122222222223333333333444444444455555555556666666666777777777788888888889999999999111111
         0123456789012345678901234567890123456789012345678901234567890123456789012345678901234567890000000
                                                                                                    012345

| NB id = 0 | NB id = 1 | NB id = 2 | NB id = 3 |

NB index →

**[FIG. 11]**

EP 4 518 540 A1

【FIG. 12】

RB index

0123456789111111111122222222223333333333444444444455555555556666666666777777777788888888889999999999111111
          01234567890123456789012345678901234567890123456789012345678901234567890123456789000000
                                                                                          012345

| NB id = 0 | NB id = 1 | NB id = 2 | NB id = 3 |

NB index

【FIG. 13】

```
┌──────┐                                    ┌─────────┐
│  UE  │                                    │ Network │
└──────┘                                    └─────────┘
   │                                             │
   │                                      S1310  │
   │         Multiple BWP configuration          │
   │◄────────────────────────────────────────────│
   │                                             │
   │  S1320                                      │
   │                                             │
┌──────────────────┐                             │
│  DL FH resource  │                             │
│   determination  │                             │
└──────────────────┘                             │
   │                                      S1330  │
   │          DL transmission with FH            │
   │◄────────────────────────────────────────────│
   │                                             │
   │                                             │
```

【FIG. 14】

UE ................................................ Network

S1410

Multiple BWP configuration

S1420

UL FH resource
determination

S1430

UL transmission with FH

【FIG. 15】

```
        ( Start )
            │
            ▼
┌─────────────────────────────────┐
│  Receive  configuration  information  │──S1510
└─────────────────────────────────┘
            │
            ▼
┌─────────────────────────────────┐
│ Transmit uplink signal or receive downlink signal │──S1520
└─────────────────────────────────┘
            │
            ▼
         ( End )
```

【FIG. 16】

```
        ( Start )
            │
            ▼
┌─────────────────────────────────┐
│  Transmit  configuration  information  │──S1610
└─────────────────────────────────┘
            │
            ▼
┌─────────────────────────────────┐
│ Receive uplink signal or transmit downlink signal │──S1620
└─────────────────────────────────┘
            │
            ▼
         ( End )
```

【FIG. 17】

【FIG. 18】

【FIG. 19】

【FIG. 20】

(100, 200)

**Device**

| | |
|---|---|
| 110 — Communication unit (e.g., 5G communication unit) | Control unit (e.g., processor(s)) — 120 |
| 112 — Communication circuit (e.g., processor(s), memory(s)) | Memory unit (e.g., RAM, storage) — 130 |
| 114 — Transceiver(s) (e.g., RF unit(s), antenna(s)) | Additional components (e.g., power unit/battery, I/O unit, driving unit, computing unit) — 140 |

【FIG. 21】

<table>
<tr><td colspan="2" align="center">**INTERNATIONAL SEARCH REPORT**</td><td colspan="2">International application No.<br><br>**PCT/KR2023/005774**</td></tr>
</table>

| A. | CLASSIFICATION OF SUBJECT MATTER |
|---|---|
| | **H04W 72/51**(2023.01)i; **H04W 72/23**(2023.01)i; **H04W 72/04**(2009.01)i; **H04W 28/08**(2009.01)i; **H04L 5/00**(2006.01)i; **H04L 27/26**(2006.01)i |
| | According to International Patent Classification (IPC) or to both national classification and IPC |

| B. | FIELDS SEARCHED |
|---|---|
| | Minimum documentation searched (classification system followed by classification symbols) |
| | H04W 72/51(2023.01); H04B 1/69(2011.01); H04B 1/713(2011.01); H04B 1/7143(2011.01); H04L 5/00(2006.01); H04W 72/04(2009.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 주파수 대역(Frequency band), 주파수 호핑(frequency hopping), eRedCap(enhanced Reduced Capability), 협대역(narrow band), 자원 블록(Resource Block, RB) |

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | KR 10-2016-0131028 A (LG ELECTRONICS INC.) 15 November 2016 (2016-11-15)<br>See paragraphs [0037], [0101], [0110]-[0111], [0114], [0127], [0130] and [0135]; claim 1; and figures 10-12. | 1-9,14-22 |
| Y | | 10-13 |
| Y | KR 10-2382605 B1 (SAMSUNG ELECTRONICS CO., LTD.) 04 April 2022 (2022-04-04)<br>See claim 1. | 10-13 |
| A | KR 10-2016-0137839 A (HUMAX CO., LTD.) 01 December 2016 (2016-12-01)<br>See paragraphs [0040]-[0126]; and figures 1-3. | 1-22 |
| A | WO 2022-072506 A1 (OFINNO, LLC) 07 April 2022 (2022-04-07)<br>See paragraphs [0042]-[0333]; and figures 1A-26. | 1-22 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 August 2023** | **28 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| International application No. |
|---|
| **PCT/KR2023/005774** |

**C.     DOCUMENTS CONSIDERED TO BE RELEVANT**

| Category* | Citation of document, with indication, where appropriate, of the relevant passages | Relevant to claim No. |
|---|---|---|
| A | QUALCOMM INCORPORATED. BW Reduction for RedCap UE. R1-2112223, 3GPP TSG RAN WG1 Meeting #107-e. 06 November 2021.<br>See sections 1-4.3. | 1-22 |

Form PCT/ISA/210 (second sheet) (July 2022)

INTERNATIONAL SEARCH REPORT
Information on patent family members

International application No.

**PCT/KR2023/005774**

| Patent document cited in search report | | | Publication date (day/month/year) | Patent family member(s) | | | Publication date (day/month/year) |
|---|---|---|---|---|---|---|---|
| KR | 10-2016-0131028 | A | 15 November 2016 | CN | 106464479 | A | 22 February 2017 |
| | | | | CN | 106464479 | B | 24 December 2019 |
| | | | | EP | 3280087 | A1 | 07 February 2018 |
| | | | | EP | 3280087 | A4 | 31 October 2018 |
| | | | | EP | 3280087 | B1 | 29 January 2020 |
| | | | | JP | 2017-519381 | A | 13 July 2017 |
| | | | | JP | 6434043 | B2 | 05 December 2018 |
| | | | | KR | 10-1923456 | B1 | 29 November 2018 |
| | | | | TW | 201637378 | A | 16 October 2016 |
| | | | | US | 10091631 | B2 | 02 October 2018 |
| | | | | US | 2018-0176753 | A1 | 21 June 2018 |
| | | | | WO | 2016-159740 | A1 | 06 October 2016 |
| KR | 10-2382605 | B1 | 04 April 2022 | CN | 107241920 | A | 10 October 2017 |
| | | | | CN | 108092757 | A | 29 May 2018 |
| | | | | CN | 108092757 | B | 11 December 2020 |
| | | | | EP | 3213454 | A1 | 06 September 2017 |
| | | | | EP | 3213454 | A4 | 17 January 2018 |
| | | | | EP | 3213454 | B1 | 27 February 2019 |
| | | | | EP | 3367604 | A1 | 29 August 2018 |
| | | | | EP | 3367604 | B1 | 04 September 2019 |
| | | | | KR | 10-2017-0128206 | A | 22 November 2017 |
| | | | | KR | 10-2021-0135650 | A | 15 November 2021 |
| | | | | KR | 10-2476993 | B1 | 13 December 2022 |
| | | | | US | 10305623 | B2 | 28 May 2019 |
| | | | | US | 10305624 | B2 | 28 May 2019 |
| | | | | US | 2016-0269939 | A1 | 15 September 2016 |
| | | | | US | 2018-0159655 | A1 | 07 June 2018 |
| | | | | US | 2018-0159656 | A1 | 07 June 2018 |
| | | | | WO | 2016-144143 | A1 | 15 September 2016 |
| KR | 10-2016-0137839 | A | 01 December 2016 | | None | | |
| WO | 2022-072506 | A1 | 07 April 2022 | US | 2023-0223985 | A1 | 13 July 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical channels and modulation. *3GPP TS 38.211*
- Multiplexing and channel coding. *3GPP TS 38.212*
- Physical layer procedures for control. *3GPP TS 38.213*
- Physical layer procedures for data. *3GPP TS 38.214*
- Physical layer measurements. *3GPP TS 38.215*
- NR and NG-RAN Overall Description. *3GPP TS 38.300*
- User Equipment (UE) procedures in idle mode and in RRC inactive state. *3GPP TS 38.304*
- Medium Access Control (MAC) protocol. *3GPP TS 38.321*
- Radio Link Control (RLC) protocol. *3GPP TS 38.322*
- Packet Data Convergence Protocol (PDCP). *3GPP TS 38.323*

- Radio Resource Control (RRC) protocol. *3GPP TS 38.331*
- Service Data Adaptation Protocol (SDAP). *3GPP TS 37.324*
- Multi-connectivity; Overall description. *3GPP TS 37.340*
- Application layer support for V2X services; Functional architecture and information flows. *3GPP TS 23.287*
- System Architecture for the 5G System. *3GPP TS 23.501*
- Procedures for the 5G System. *3GPP TS 23.502*
- Policy and Charging Control Framework for the 5G System. *3GPP TS 23.503*
- Non-Access-Stratum (NAS) protocol for 5G System (5GS). *3GPP TS 24.501*
- Access to the 3GPP 5G Core Network (5GCN) via non-3GPP access networks. *3GPP TS 24.502*
- User Equipment (UE) policies for 5G System (5GS). *3GPP TS 24.526*